# EUROPÄISCHE PATENTANMELDUNG

(11) **EP 4 456 062 A1**
(43) Veröffentlichungstag der Anmeldung: **30.10.2024**
(21) Anmeldenummer: 23170532.8
(22) Anmeldetag: 28.04.2023
(51) Int. Cl.: G10L 15/24, G10L 15/25, G10L 15/04

(54) **VERFAHREN UND SYSTEM ZUR SPRACHSTEUERUNG EINER VORRICHTUNG**

(71) Anmelder: Siemens Healthineers AG, 91301 Forchheim (DE)
(72) Erfinder: Kuhrt, Sören, 91056 Erlangen (DE)
(74) Vertreter: Siemens Healthineers Patent Attorneys

(57) **Zusammenfassung**

Bereitgestellt werden Verfahren und Systeme (10) zur Sprachsteuerung einer Vorrichtung (1), die insbesondere auf einem Erfassen eines Audiosignals (AS) mit einer Audioerfassungseinrichtung (MIK) und einem Erfassen eines Bildsignals (BS) mit einer Bilderfassungseinrichtung (KAM) aus einer Umgebung der Vorrichtung (1) beruhen. Darauf aufbauend wird vorgeschlagen, das Bildsignal (BS) zur Bereitstellung eines Bildanalyseergebnisses (BAE) zu analysieren, das Audiosignal (AS) unter Verwendung des Bildanalyseergebnisses (BAE) zur Bereitstellung eines Audioanalyseergebnisses (AAE) zu verarbeiten, und basierend auf dem Audioanalyseergebnis (AAE) ein Steuersignal (C1) zur Steuerung der Vorrichtung (1) zu erzeugen, um dieses in die Vorrichtung (1) einzugeben.

## Beschreibung

Die Erfindung betrifft ein Verfahren zur Sprachteuerung einer Vorrichtung. Insbesondere betrifft die Erfindung ein Verfahren zur Sprachsteuerung basierend auf einem Audio- und einem Videosignal. Insbesondere betrifft die Erfindung ein Verfahren zur Sprachsteuerung einer medizinischen Vorrichtung. Ferner betrifft die Erfindung eine Sprachanalysevorrichtung zur Sprachsteuerung einer insbesondere medizinischen Vorrichtung sowie ein medizinisches System aufweisend die Sprachanalysevorrichtung und die medizinische Vorrichtung.

Unabhängig vom grammatikalischen Geschlecht eines bestimmten Begriffes sind Personen mit männlicher, weiblicher oder anderer Geschlechteridentität mit umfasst.

Medizinische Vorrichtungen werden typischerweise zur Behandlung und/oder Untersuchung eines Patienten eingesetzt. Zur Untersuchung eines Patienten werden beispielsweise medizinische bildgebende Modalitäten als medizinische Vorrichtungen verwendet. Solche bildgebenden Modalitäten können z.B. Magnetresonanzvorrichtungen, Computertomographievorrichtungen, PET-Vorrichtungen (Positronen-Emissions-Tomographie-Vorrichtungen) usw. umfassen. Ferner werden zur Behandlung eines Patienten Interventions- und/oder Therapievorrichtungen eingesetzt, wie etwa eine Strahlen- bzw. Radiotherapievorrichtung, eine Vorrichtung zur Durchführung eines insbesondere minimalinvasiven Eingriffs und dergleichen. Dabei wird die Behandlung und/oder Untersuchung des Patienten mittels der medizinischen Vorrichtung typischerweise von einem Bedienpersonal, beispielsweise Pflegepersonal, technischem Personal, Röntgenassistenzpersonal oder Ärztinnen, unterstützt.

Vor und während der Durchführung einer Behandlung und/oder Untersuchung eines Patienten mit einer solchen medizinischen Vorrichtung sind üblicherweise verschiedene Einstellungen an der medizinischen Vorrichtung vorzunehmen, wie beispielsweise eine Eingabe von Patientendaten, eine Einstellung verschiedener Geräteparameter und dergleichen. Diese Schritte werden typischerweise von dem Bedienpersonal durchgeführt, wobei die Vornahme der Einstellungen der medizinischen Vorrichtung typischerweise über eine an der Vorrichtung bereitgestellte physische Benutzerschnittstelle erfolgt, in welche eine Bedienperson Eingaben vornehmen kann.

Um solche medizinischen Vorrichtungen wirtschaftlich zu betreiben, ist ein reibungsloser Arbeits- bzw. Verfahrensablauf wünschenswert. Insbesondere soll die Vornahme von Einstellungen so einfach wie möglich gestaltet werden. Die DE 10 2006 045 719 B4 beschreibt in dieser Hinsicht ein medizinisches System mit Spracheingabevorrichtung, bei dem spezifische Funktionen des Systems mittels einer Sprachsteuerung aktiviert und deaktiviert werden können. Dabei wird ein mit der Spracheingabevorrichtung erfasstes Audiosignal mit einem Sprachanalysemodul verarbeitet, um ein oder mehrere Sprachbefehle einer Bedienperson zu ermitteln.

Bei der Sprachsteuerung komplexer Systeme entsteht häufig ein Zielkonflikt zwischen der für viele Anwendungen erforderlichen Geschwindigkeit der Sprachanalyse und einer möglichst korrekten und vollständigen Erfassung der durch natürliche Sprache formulierten Nutzerintention der Bedienperson. Zudem muss die Spracheingabe der Bedienperson von anderen Geräuschquellen unterschieden werden. Dies ist insbesondere dann anspruchsvoll, wenn weitere in natürlicher Sprache formulierte Eingaben vorhanden sind, die nicht von der Bedienperson stammen und folglich nicht im Rahmen einer Sprachsteuerung umgesetzt werden dürfen.

Zu lange Analysedauern können zu unnötigen Wartezeiten für die Bedienperson und damit zu Frustration führen. Eine allein auf Geschwindigkeit bedachte Sprachanalyse kann umgekehrt zur Ausführung einer falschen oder unvollständigen Anweisung führen und Fehler verursachen, was vor allem im medizinischen Kontext häufig nicht akzeptabel ist.

Es ist folglich eine Aufgabe der vorliegenden Erfindung, dieses Problem zu lösen und ein Verfahren zur Sprachsteuerung einer Vorrichtung bereitzustellen, das eine in dieser Hinsicht verbesserte Ermittlung von Sprachbefehlen einer Bedienperson gestattet. Insbesondere soll ein solches Verfahren eine möglichst fehlerfreie Erfassung der tatsächlichen Nutzerintention ermöglichen. Es ist ferner eine Aufgabe der vorliegenden Erfindung, auf dieser Grundlage eine Sprachanalysevorrichtung zur Sprachsteuerung einer Vorrichtung anzugeben, wobei die Vorrichtung insbesondere eine medizinische Vorrichtung sein kann. Ferner ist es eine Aufgabe der vorliegenden Erfindung, ein - insbesondere medizinisches - System umfassend die - insbesondere medizinische - Vorrichtung und eine entsprechende (d.h. die Verfahren ausführende) Sprachanalysevorrichtung anzugeben.

Gemäß der Erfindung wird die gestellte Aufgabe mit einem Verfahren zur Sprachsteuerung einer Vorrichtung, einer Sprachanalysevorrichtung, einem System aufweisend die Sprachanalysevorrichtung, einem Computerprogramprodukt sowie einem computerlesbaren Speichermedium gemäß dem Hauptanspruch und den nebengeordneten Ansprüchen gelöst. Vorteilhafte Weiterbildungen sind in den abhängigen Ansprüchen angegeben.

Nachstehend wird die erfindungsgemäße Lösung der Aufgabe sowohl in Bezug auf die beanspruchten Vorrichtungen als auch in Bezug auf die beanspruchten Verfahren beschrieben. Hierbei erwähnte Merkmale, Vorteile oder alternative Ausführungsformen sind ebenso auch auf die anderen beanspruchten Gegenstände zu übertragen und umgekehrt. Mit anderen Worten können die gegenständlichen Ansprüche (die beispielsweise auf Sprachanalysevorrichtungen und zugehöre Systeme gerichtet sind) auch mit den Merkmalen weitergebildet sein, die in Zusammenhang mit einem Verfahren beschrieben oder beansprucht sind. Die entsprechenden funktionalen Merkmale des Verfahrens werden dabei durch entsprechende gegenständliche Merkmale ausgebildet.

Gemäß einem Aspekt wird ein Computer-implementiertes Verfahren zur Sprachsteuerung einer Vorrichtung bereitgestellt. Das Verfahren weist mehrere Schritte auf. Ein Schritt ist auf ein Erfassen eines Audiosignals mit einer Audioerfassungseinrichtung gerichtet. Ein Schritt ist auf ein Erfassen eines Bildsignals einer Umgebung der Vorrichtung mit einer Bilderfassungseinrichtung gerichtet. Ein Schritt ist auf ein Analysieren des Bildsignals zur Bereitstellung eines Bildanalyseergebnisses gerichtet. Ein Schritt ist auf ein Verarbeiten des Audiosignals unter Verwendung des Bildanalyseergebnisses zur Bereitstellung eines Audioanalyseergebnisses gerichtet. Ein Schritt ist auf ein Erzeugen eines Steuersignals zur Steuerung der Vorrichtung basierend auf dem Audioanalyseergebnis gerichtet. Ein Schritt ist auf eine Eingabe des Steuersignals in die Vorrichtung gerichtet.

Die Vorrichtung kann als durch Spracheingabe zu steuernde, gegenständliche Vorrichtung aufgefasst werden. Die Vorrichtung ist zunächst nicht weiter eingeschränkt und kann jedwede technische Vorrichtung betreffen, die für eine Sprachsteuerung ausgelegt ist. Dies kann z.B. ein digitales Diktiergerät, einen Computer, einen Bordcomputer eines Fahrzeugs, einen Roboter, eine Maschine und dergleichen umfassen.

Gemäß einigen Beispielen umfasst die gegenständliche Vorrichtung eine medizinische Vorrichtung. Die medizinische Vorrichtung kann insbesondere dazu ausgebildet sein, eine medizinische Prozedur durchzuführen und/oder zu unterstützen. Die medizinische Prozedur kann eine bildgebende und/oder interventionelle und/oder therapeutische Prozedur aber auch eine Überwachung eines Patienten umfassen. Insbesondere kann die medizinische Vorrichtung eine bildgebende Modalität umfassen, wie beispielsweise ein Magnetresonanzgerät, ein Einzelphotonenemissionstomographie-Gerät (SPECT-Gerät), ein Positronen-Emissions-Tomographie-Gerät (PET-Gerät), einen Computertomograph, ein Ultraschall-Gerät, ein Röntgengerät oder ein als C-Bogen-Gerät ausgebildetes Röntgengerät. Die bildgebende Modalität kann auch ein kombiniertes medizinisches Bildgebungsgerät sein, welches eine beliebige Kombination aus mehreren der genannten bildgebenden Modalitäten umfasst. Ferner kann die medizinische Vorrichtung eine Interventions- und/oder Therapievorrichtung aufweisen, wie etwa eine Biopsievorrichtung, eine Strahlen- bzw. Radiotherapievorrichtung zur Bestrahlung eines Patienten, und/oder eine Eingriffsvorrichtung zur Durchführung eines, insbesondere minimalinvasiven, Eingriffs. Gemäß weiteren Implementierungen kann die medizinische Vorrichtung zusätzlich oder alternativ Patientenüberwachungsmodule, wie etwa ein EKG-Gerät, und/oder ein Patienten-Pflegegerät umfassen, wie etwa ein Beatmungsgerät, ein Infusionsgerät und/oder ein Dialysegerät.

Das Audiosignal kann insbesondere eine Schallinformation enthalten. Insbesondere kann das Audiosignal eine Schallinformation einer Umgebung der Vorrichtung enthalten. Insbesondere kann das Audiosignal ein Audiosignal einer Umgebung der Vorrichtung sein bzw. ein solches umfassen.

Das Audiosignal kann ein analoges oder digitales bzw. digitalisiertes Signal sein. Das digitalisierte Signal kann ausgehend von dem analogen Signal z.B. durch einen Analog-Digital-Wandler erzeugt werden. Entsprechend kann der Schritt des Empfangens einen Schritt des Bereitstellens eines digitalisierten Audiosignals basierend auf dem empfangenen Audiosignal bzw. ein Digitalisieren des empfangenen Audiosignals umfassen. Das Empfangen des Audiosignals kann insbesondere ein Registrieren und/oder Aufnehmen des Audiosignals mittels der Audioempfangseinrichtung umfassen.

Das Audiosignal kann dabei eine Kommunikation von einer Person (im Folgenden auch Bedienperson), wie beispielsweise eine auszuführende Anweisung oder eine Frage, umfassen. Mit anderen Worten kann das Audiosignal eine Spracheingabe der Bedienperson in natürlicher Sprache umfassen. Als natürliche Sprache wird typischerweise eine von Menschen gesprochene Sprache bezeichnet. Natürliche Sprache kann auch einen Tonfall und/oder eine Sprachmelodie zur Modulation der Kommunikation aufweisen. Natürliche Sprachen können im Gegensatz zu formalen Sprachen strukturelle und lexikalische Uneindeutigkeiten aufweisen.

Die Audioerfassungseinrichtung kann als Teil der Vorrichtung oder unabhängig von dieser ausgebildet sein. Die Audioerfassungseinrichtung kann ein oder mehrere Mikrophone aufweisen. Die Audioerfassungseinrichtung kann ein oder mehrere Richtmikrophone aufweisen.

Das Bildsignal kann insbesondere ein Videosignal aus einer Umgebung der Vorrichtung aufweisen. Das Bildsignal kann einen Videostream einer Umgebung der Vorrichtung aufweisen. Das Bildsignal kann parallel und insbesondere gleichzeitig mit dem Audiosignal aufgenommen werden. Das Bildsignal kann mit dem Audiosignal zeitlich registriert sein.

Das Bildsignal kann ein analoges oder digitales bzw. digitalisiertes Signal sein. Das digitalisierte Signal kann ausgehend von dem analogen Signal z.B. durch einen Analog-Digital-Wandler erzeugt werden. Entsprechend kann der Schritt des Empfangens einen Schritt des Bereitstellens eines digitalisierten Bildsignals basierend auf dem empfangenen Bildsignal bzw. ein Digitalisieren des empfangenen Bildsignals umfassen. Das Empfangen des Bildsignals kann insbesondere ein Registrieren und/oder Aufnehmen des Bildsignals mittels der Bilderfassungseinrichtung umfassen. Das Bildsignal kann insbesondere wenigstens eine zeitliche Abfolge zweidimensionaler Bilder einer Umgebung der Vorrichtung umfassen, wobei die einzelnen Bilder M mal N Bildpunkte oder Pixel aufweisen können, welche die Bildinformation kodieren.

Das Bildsignal kann dabei eine Bild- oder Videoaufnahme einer oder mehrerer Personen, insbesondere umfassend eine Bedienperson, in einer Umgebung der Vorrichtung umfassen.

Die Bilderfassungseinrichtung kann als Teil der Vorrichtung oder unabhängig von dieser ausgebildet sein. Die Bilderfassungseinrichtung kann ein oder mehrere Kameras aufweisen. Die Bilderfassungseinrichtung kann mit der Audioerfassungseinrichtung integriert sein.

Gemäß einigen Beispielen kann sich der Begriff "Person" auf beliebige in einer Umgebung der Vorrichtung befindliche Personen beziehen, während der Begriff "Bedienperson" eine zur Bedienung der Vorrichtung autorisierte Person bezeichnen kann. Personen können z.B. Patienten, Angehörige, Hilfskräfte, medizinisch-technische Assistenten, Ärztinnen usw. umfassen. Bedienpersonen können z.B. medizinisch-technische Assistenten oder Ärztinnen umfassen.

Ein Analysieren der Bildsignals kann im Wesentlichen in Echtzeit erfolgen. Eine Analyse im Wesentlichen in Echtzeit bedeutet, dass das Signal fortlaufend analysiert wird. Mit anderen Worten findet eine "rollende" Analyse des Signals statt. Es wird also nicht gewartet, bis z.B. eine Spracheingabe einer Bedienperson abgeschlossen ist, um erst danach das Bildsignal zu analysieren.

Ein Analysieren der Bildsignals kann allgemein mit Mitteln der Bilddatenanalyse bzw. Bilddatenauswertung erfolgen. Der Schritt des Analysierens kann ein Anwenden eines oder mehrerer Bildanalysealgorithmen auf das Bildsignal umfassen.

Das Bildanalyseergebnis kann wenigstens eine für die Analyse des Audiosignals relevante, insbesondere visuelle, Information aufweisen, insbesondere aus einem Umfeld der Vorrichtung.

Insbesondere kann das Bildanalyseergebnis eine visuelle Information über eine Person, und insbesondere über eine Bedienperson, in einem Umfeld der Vorrichtung umfassen. Die Information kann dabei in dem Schritt des Analysierens des Bildsignals aus dem Bildsignal extrahiert werden, z.B. durch Anwenden ein oder mehrerer Bildanalysealgorithmen.

Zur Bildanalyse können im Prinzip bekannte Algorithmen verwendet werden, die beispielsweise zur Erkennung von Personen und/oder Gesichtern und/oder Lippenbewegungen ausgebildet sind. Exemplarisch sei in diesem Zusammenhang auf https://en.wikipedia.org/wiki/Facial_recognition_system verwiesen. Die darin vorgestellten und/oder referenzierten Technologien (aber natürlich auch andere) können als Bildanalysealgorithmus und damit zur Bereitstellung des Bildanalyseergebnisses verwendet werden. Für eine Gesichts- und damit Personenerkennung im medizinischen Umfeld sei exemplarisch auf die Offenbarung der DE 10 2014 202 893 A1 verwiesen, deren Inhalt vorliegend durch Bezugnahme in seiner Gesamtheit einbezogen ist.

Die Analyse des Audiosignals zur Bereitstellung des Audioanalyseergebnisses kann insbesondere im Wesentlichen in Echtzeit erfolgen. Dabei hängt die Analyse des Audiosignals in einigen Ausführungsformen von dem Bildanalyseergebnis ab.

Das Audioanalyseergebnis kann dabei als eine Art Zwischenergebnis verstanden werden, auf dessen Grundlage anschließend die Steuerbefehle erzeugt werden können. Entsprechend kann die Audioanalyse als eine Art Vorverarbeitung des Audiosignals verstanden werden. Das Audioanalyseergebnis kann dabei insbesondere Bestandteile des Audiosignals umfassen, die aus diesem extrahiert wurden, wie z.B. bestimmte Frequenzbereiche und/oder zeitliche Abschnitte. Gemäß Ausführungsformen kann der Schritt des Analysierens des Audiosignals ein Filtern des Audiosignals umfassen.

Zur Analyse des Audiosignals kann ferner ein Verfahren zur Verarbeitung natürlicher Sprache eingesetzt werden. Insbesondere kann dazu ein Computerlinguistik-Algorithmus auf das Audiosignal angewendet werden. Eine Möglichkeit zur Verarbeitung der in natürlicher Sprache formulierten Spracheingabe zur Bereitstellung des Sprachanalyseergebnisses ist ein Umwandeln der in natürlicher Sprache formulierten Spracheingabe in Text (also strukturierte Sprache), mittels eines Sprache-zu-Text (Software-)Moduls (engl.: text-to-speech). Anschließend kann eine weitere Analyse zur Bereitstellung des Sprachanalyseergebnisses, beispielsweise mittels latenter semantischer Analyse (engl. latent semantic indexing, kurz LSI), dem Text eine Bedeutung beimessen. Es kann also bereits bevor die Spracheingabe beendet ist eine Sprachanalyse und insbesondere ein Verstehen der in der Spracheingabe enthaltenen natürlichen Sprache (engl.: natural language understanding, NLU) erfolgen. So können z.B. Spracheingaben fortlaufend erfasst und als Audioanalyseergebnis für eine Weiterverarbeitung bereitgestellt werden.

Die Analyse des Audiosignals kann dabei im Wesentlichen in Echtzeit erfolgen. Eine Analyse im Wesentlichen in Echtzeit bedeutet, dass das Audiosignal fortlaufend analysiert wird. Mit anderen Worten findet eine "rollende" Analyse des Audiosignals bzw. der darin enthaltenen Spracheingabe statt. Es wird also nicht gewartet, bis die Spracheingabe der Bedienperson abgeschlossen ist, um danach die Spracheingabe im Ganzen zu analysieren.

Basierend auf dem Bildanalyseergebnis kann gemäß Ausführungsformen bedeuten, dass das Bildanalyseergebnis bei der Analyse des Audiosignals berücksichtigt wird. Beispielsweise kann dies umfassen, dass das Audiosignal basierend auf dem Bildanalyseergebnis gefiltert und insbesondere trunkiert und/oder verifiziert wird. Insbesondere kann dies bedeuten, dass das Audiosignal basierend auf einer visuellen Information aus einer Umgebung der Vorrichtung gefiltert und insbesondere trunkiert und/oder verifiziert wird.

Dieser Schritt ist auf die anschließende Verarbeitung des Audioanalyseergebnisses gerichtet, um ein oder mehrere Steuersignale bereitzustellen.

Die Steuersignale können insbesondere mit einem separaten (zweiten) Computerlinguistik-Algorithmus ausgeführt werden, der auf das Audioanalyseergebnis angewendet wird. Der zweite Computerlinguistik-Algorithmus kann insbesondere ein Sprache-zu-Text (Software-)Modul (engl.: text-to-speech) aufweisen. Zur weiteren Analyse und zur Identifizierung ein oder mehrerer Sprachbefehle kann der zweite Computerlinguistik-Algorithmus zusätzlich oder alternativ ein Spracherkennungs-(Software-)Modul aufweisen (NLU-Modul), das beispielsweise mittels LSI dem Sprachdatenstrom eine Bedeutung beimessen kann.

Durch die zweigeteilte Verarbeitung (Teil 1 zur bedarfsgerechten Filterung der Spracheingabe unter Verwendung von Bildanalyseergebnissen und Teil 2 zur anschließenden Analyse des Audioanalyseergebnis) kann eine zuverlässige Identifizierung von Sprachbefehlen erreicht werden (die regelmäßig die Analyse des gesamten Audioanalyseergebnisses bedarf).

Es kann in einigen Beispielen vorgesehen sein, dass zunächst ein oder mehrere Sprachbefehle in dem Audioanalyseergebnis identifiziert werden, die dann in einer weiteren Verarbeitung in ein oder mehreren Steuersignale für die Vorrichtung umgesetzt werden können.

Durch die Erfassung eines Videosignals aus der Umgebung der Vorrichtung kann eine visuelle Information gewonnen werden, die bei der Analyse des Audiosignals verwendet werden kann. Dadurch kann die Analyse des Audiosignals verbessert werden, wodurch wiederrum eine Fehlersicherheit der Sprachanalyse und damit der Sprachsteuerung der Vorrichtung verbessert werden können.

Gemäß einem Aspekt umfasst der Schritt des Erzeugens eines Steuersignals ein Identifizieren ein oder mehrerer Spracheingaben in dem Audioanalyseergebnis und ein Erzeugen des Steuersignale basierend auf den ein oder mehreren Spracheingaben.

Mit anderen Worten wird so ein zweistufiges Verarbeitungsschema realisiert, das eine situative Vorverarbeitung des Audiosignals mit einer holistischen Analyse der so erzeugten Audioanalyseergebnisses kombiniert. Letzteres ist vorteilhaft, da durch eine ganzheitliche Analyse zusätzliche Informationen gewonnen werden können. So kann z.B. bei der Analyse von Worteinbettungen bezogen auf die Spracheingabe auf den textlichen Kontext in beide zeitlichen Richtungen zurückgegriffen werden.

Gemäß einem Aspekt umfasst der Schritt des Identifizierens ein oder mehrerer Spracheingaben ein Erkennen einzelner Worte oder Wortgruppen in dem Audioanalyseergebnis, insbesondere mit einem Verfahren zur Erkennung natürlicher Sprache (NLU) und/oder mit einer semantischen Analyse.

Gemäß einem Aspekt umfasst der Schritt des Erzeugens des Steuersignales basierend auf den ein oder mehreren Spracheingaben ein Vergleichen oder in-Verbindung-bringen der ein oder mehreren Spracheingaben mit einem vordefinierten Satz möglicher Sprachbefehle für die Vorrichtung. Der vordefinierte Satz möglicher Sprachbefehle kann z.B. in Form einer Befehlsbibliothek vorliegen.

Gemäß einem Aspekt umfasst das Verarbeiten des Audiosignals ein Bereitstellen eines Audioanalysealgorithmus (auch erster Computerlinguistikalgorithmus), der dazu ausgebildet ist basierend auf einem Audiosignal ein Audioanalyseergebnis bereitzustellen, auf dessen Grundlage Steuersignale für die Steuerung der Vorrichtung bestimmt werden können, und ein Anwenden des Audioanalysealgorithmus auf das Audiosignal.

Der Audioanalysealgorithmus kann zur Verarbeitung von Audiofrequenzen ausgebildet sein. Insbesondere kann der Audioanalysealgorithmus zum Filtern eines Audiosignals und insbesondre zur Erkennung von Sprechfrequenzen ausgebildet sein. Insbesondere kann der Audioanalysealgorithmus zu einer Frequenzanalyse ausgebildet sein. Insbesondere kann der Audioanalysealgorithmus zum Erkennen eines Beginns und/oder Endes einer Spracheingabe insbesondere basierend auf einer Frequenzanalyse des Audiosignals ausgebildet sein. Insbesondere kann der Audioanalysealgorithmus zum Erkennen einer Identität eines Sprechers insbesondere basierend auf einer Frequenzanalyse des Audiosignals ausgebildet sein. Gemäß Ausführungsformen ist der Audioanalysealgorithmus nicht zur Verarbeitung von natürlicher Sprache ausgebildet, insbesondere nicht zur Erkennung eines Sinngehalts natürlicher Sprache.

Gemäß einem Aspekt umfasst das Erzeugen des Steuersignals und insbesondere der Schritt des Identifizierens ein oder mehrerer Spracheingaben ein Bereitstellen eines (zweiten) Computerlinguistikalgorithmus, der dazu ausgebildet ist, Spracheingaben in Audioanalyseergebnissen zu identifizieren, und ein Anwenden des (zweiten) Computerlinguistikalgorithmus auf das Audioanalyseergebnis.

Der Audioanalysealgorithmus kann entsprechend dazu ausgebildet sein, ein Audiosignal derart zu bearbeiten, dass ein Audioanalyseergebnis zur Weiterverarbeitung durch den (zweiten) Computerlinguistikalgorithmus bereitgestellt wird.

Der Computerlinguistikalgorithmus kann entsprechend dazu ausgebildet sein, basierend auf dem Audioanalyseergebnis ein oder mehrere Spracheingaben oder Sprachbefehle zur Steuerung der Vorrichtung zu identifizieren.

Der Computerlinguistikalgorithmus kann einen oder mehrere bekannte Sprachanalysealgorithmen und insbesondere ein oder mehrere Algorithmen des maschinellen Lernens umfassen.

Gemäß einigen Ausführungsformen umfasst der Computerlinguistikalgorithmus ein sog. Transformer-Netzwerk. Ein Transformer-Netzwerk ist eine neuronale Netzwerk-Architektur, die im Allgemeinen einen Encoder und/oder einen Decoder umfasst. Dabei können Encoder und/oder Decoder jeweils mehrere Encoder- bzw. Decoder-Schichten aufweisen. Innerhalb der Schichten ist ein sog. Aufmerksamkeits-Mechanismus (engl.: attention mechanism) implementiert. Der Aufmerksamkeits-Mechanismus verknüpft einzelne Bestandteile des Audioanalyseergebnisses, wie einzelne Worte, mit anderen Bestandteilen des Audioanalyseergebnisses. Dadurch kann der Computerlinguistikalgorithmus die relative Wichtigkeit einzelner Worte in dem Audioanalyseergebnis bezüglich anderer Worte in dem Audioanalyseergebnis bestimmen und so den sprachlichen Gehalt des Audioanalyseergebnisses und somit ein oder mehrere Spracheingaben bestimmen. Für weitere Details hinsichtlich einer möglichen Implementierung sei auf Vaswani et al., "Attention Is All You Need", in arXiv: 1706.03762, 12. Juni 2017, verwiesen, dessen Inhalt vorliegend durch Bezugnahme in seiner Gesamtheit einbezogen ist.

Gemäß einem Aspekt kann der Audioanalysealgorithmus als sog. Front-End-Algorithmus implementiert sein, der z.B. in einer lokalen Recheneinheit, wie etwa der Steuereinheit der Vorrichtung oder in einem lokalen Spracherkennungsmodul, gehostet ist. Als Front-End kann die Verarbeitung insbesondere gut in Echtzeit erfolgen, sodass das Ergebnis praktisch ohne nennenswerte Zeitverzögerung erhalten werden kann. Entsprechend kann der (zweite) Computerlinguistik-Algorithmus als sog. Back-End-Algorithmus implementiert sein, der z.B. in einer entfernten (engl.: remote) Recheneinrichtung, wie etwa einem reellen Server-basierten Rechensystem oder einem virtuellen Cloud-Rechensystem, gehostet ist. In einer Back-End-Implementierung können insbesondere komplexe Analysealgorithmen eingesetzt werden, die eine hohe Rechenleistung erfordern.

Entsprechend kann das Verfahren ein Übermitteln des Audioanalyseergebnis an eine entfernte Recheneinrichtung und ein Empfangen ein oder mehrerer Spracheingaben von der entfernten Recheneinrichtung umfassen, auf deren Grundlage dann im Schritt des Erzeugens die Steuersignale erzeugt werden.

In alternativen Implementierungen kann auch der zweite Computerlinguistik-Algorithmus als Front-End-Algorithmus implementiert sein. Umgekehrt kann auch der erste Computerlinguistik-Algorithmus als Back-End-Algorithmus implementiert sein.

Gemäß einem Aspekt umfasst das Verfahren ferner ein Empfangen eines Systemzustands von der Vorrichtung, welcher Systemzustand eine Information über einen momentanen Zustand der Vorrichtung umfasst, wobei das Schritt des Erzeugens des Steuersignals basierend auf dem Systemzustand erfolgt.

Der Systemzustand kann dabei durch einen jeweiligen Arbeitsschritt oder eine Abfolge bzw. Sequenz von Arbeitsschritten festgelegt sein, welche die Vorrichtung gerade ausführt. Durch die Berücksichtigung des momentanen Systemzustands können Steuersignale zielgerichteter bestimmt werden.

Gemäß einem Aspekt enthält das Audiosignal eine Spracheingabe einer Person, und das Bildsignal enthält eine Aufnahme der Person und insbesondere eine Aufnahme des Gesichts der Person.

Mit anderen Worten kann die Person durch zwei verschiedene Medien erfasst werden, was eine zielgerichtete Analyse des Audiosignals ermöglicht. Gemäß einigen Beispielen umfasst das Bildanalyseergebnis eine visuelle Information der Person und/oder das Audioanalyseergebnis umfasst eine Audioinformation der Person.

Gemäß einem Aspekt umfasst der Schritt des Erfassens des Bildsignals ein Ausrichten der Bilderfassungseinrichtung auf die Person und insbesondere ein Gesicht der Person.

Durch ein automatisches Ausrichten der Bilderfassungseinrichtung kann gezielt eine visuelle Information über die Person erfasst werden, was eine verbesserte Analyse des Audiosignals ermöglicht. Gemäß einigen Beispielen umfasst das Ausrichten ein Bestimmen einer Positionsinformation der Person in einer Umgebung der Vorrichtung basierend auf dem Audiosignal und ein Ausrichten der Bilderfassungseinrichtung basierend auf der Positionsinformation.

Eine solche Positionsinformation kann beispielsweise durch Verwendung mehrerer räumlich beabstandeter einzelner Mikrophone oder eines oder mehrerer Richtmikrophone in der Audioerfassungseinrichtung erhalten werden.

Gemäß einem Aspekt umfasst der Schritt des Analysierens des Bildsignals ein Erfassen einer Sprechaktivität der Person und das das Bildanalyseergebnisses umfasst die Sprechaktivität.

Eine Sprechaktivität kann insbesondere eine visuelle Information dahingehend umfassen, dass die Person gerade spricht.

Gemäß einigen Beispielen umfasst der Schritt des Erfassens der Sprechaktivität ein Erfassen einer Lippenbewegung der Person.

Durch die Sprechaktivität kann die Analyse des Audiosignals präzisiert werden. Wird beispielsweise keine (visuelle) Sprechaktivität in dem Bildsignal erkannt, kann auf eine Analyse des Audiosignals verzichtet werden. Ferner kann eine akustisch in dem Audiosignal erkannte Sprechaktivität verifiziert werden. Dadurch können die Analyse des Audiosignals und damit die Sprachsteuerung verbessert werden, was die Fehlersicherheit erhöht.

Gemäß einem Aspekt umfasst der Schritt des Analysierens des Bildsignals ein Erkennen der Person und das Bildanalyseergebnis umfasst eine Identität der Person.

Gemäß einem Aspekt umfasst das Erkennen der Person ein Bereitstellen eines Gesichtserkennungsalgorithmus und ein Anwenden des Gesichtserkennungsalgorithmus auf das Bildsignal.

Der Gesichtserkennungsalgorithmus kann dabei dazu ausgebildet sein, Gesichter in Bildsignalen zu erkennen und einer vorbestimmten Identität zuzuordnen, um so die Identität bereitzustellen. Das Zuordnen kann ein Auswählen aus einer Vielzahl vorbestimmter Identitäten umfassen, wobei den vorbestimmten Identitäten jeweils eine für eine Bedienung der Vorrichtung autorisierte Person zugeordnet ist. Kann keine Zuordnung erfolgen, kann als Identität "unbekannt" ausgegeben werden.

Gemäß einem Aspekt umfasst das Erkennen ein Erkennen der Person, bei der die Sprechaktivität erfasst wurde, und das Bildanalyseergebnis umfasst eine Identität der Person, bei der die Sprechaktivität erfasst wurde.

Durch die Feststellung einer Identität einer Person in der Umgebung der Vorrichtung und insbesondere einer Identität einer sprechenden Person können Fehlbedienungen vermieden werden, was die Sicherheit der Sprachsteuerung erhöht.

Gemäß einigen Beispielen umfasst der Schritt des Analysierens des Audiosignals ein Erkennen der Person und das Sprachanalyseergebnis umfasst eine zweite Identität der Person. Gemäß einigen Beispielen umfasst das Verfahren ein Verifizieren der Identität der Person mit der zweiten Identität (und umgekehrt).

Gemäß einigen Beispielen kann ein Erkennen der Person anhand des Audiosignals ein Erkennen einer Audiosignatur der Person in dem Audiosignal umfassen. Dies kann beispielsweise durch einen entsprechend ausgebildeten Audioanalysealgorithmus erfolgen.

Gemäß einem Aspekt umfasst der Schritt des Analysierens des Bildsignals ein Authentifizieren der Person als für die Bedienung der Vorrichtung autorisiert basierend auf der Identität, und der Schritt des Verarbeitens des Audiosignals und/oder der Schritt des Erzeugens des Steuersignals und/oder der Schritt der Eingabe des Steuersignals werden nur ausgeführt, falls die Person im Schritt des Authentifizierens als für die für die Bedienung der Vorrichtung autorisiert authentifiziert wurde.

Gemäß einigen Beispielen umfasst das Authentifizieren ein Authentifizieren der Person, bei der die Sprechaktivität erfasst wurde.

Durch den Schritt des Authentifizierens kann zum einen die Bediensicherheit erhöht werden, da so nur die Sprachsignale von autorisierten Personen berücksichtigt werden können. Zum anderen kann die Verarbeitung effizienter gestaltet werden, da die weitere Verarbeitung des Audiosignals nur erfolgt, sofern eine autorisierte Bedienperson erkannt wurde.

Gemäß einem Aspekt umfasst der Schritt des Verarbeitens des Audiosignals ein Erkennen eines Beginns einer Spracheingabe in dem Audiosignal basierend auf dem Bildanalyseergebnis, ein Erkennen eines Endes der Spracheingabe basierend auf dem Bildanalyseergebnis, und ein Bereitstellen eines Sprachdatenstroms basierend auf dem Audiosignal zwischen dem erkannten Beginn und dem erkannten Ende als Audioanalyseergebnis. Der Schritt des Erzeugens des Steuersignals erfolgt basierend auf dem Sprachdatenstroms.

Der Sprachdatenstrom kann das digitalisierte Audiosignal zwischen dem erkannten Beginn und dem erkannten Ende umfassen oder auf diesem basieren. Bereitgestellt werden kann der Sprachdatenstrom beispielsweise in Form einer Aufzeichnung des Audiosignals zwischen erkanntem Beginn und erkanntem Ende. Entsprechend kann der Schritt des Bereitstellens ein Aufzeichnen des Audiosignals und/oder der Spracheingabe zwischen dem erkannten Beginn und dem erkannten Ende und ein Bereitstellen der Aufzeichnung als den Sprachdatenstrom umfassen. Bereitgestellt werden kann der Sprachdatenstrom dabei insbesondere zur weiteren Analyse des Sprachdatenstroms, z.B. um ein oder mehrere Sprachbefehle in dem Sprachdatenstrom zu erkennen. Entsprechend kann der Schritt des Bereitstellens ein Bereitstellen des Sprachdatenstroms für ein entsprechendes Spracherkennungsmodul bzw. einen entsprechenden (zweiten) Computerlinguistik-Algorithmus umfassen bzw. ein Eingeben des Sprachdatenstroms in das Spracherkennungsmodul bzw. den entsprechenden (zweiten) Computerlinguistik-Algorithmus zur Erkennung ein oder mehrerer Sprachbefehle in dem Sprachdatenstrom umfassen.

Durch das Bildanalyseergebnis kann eine Entscheidung zum Beginn und Abschluss der Spracheingabe dynamisch festgelegt werden. Die Auswertung Bildanalyseergebnis ermöglicht dabei eine zuverlässige Sprachanfang- und Sprachende-Erkennung und damit eine verbesserte Bediensicherheit. So kann anhand des Bildanalyseergebnisses z.B. vermieden werden, dass zu lange auf weitere Sprache der Person gewartet wird, was unnötige Wartezeiten für den Anwender bedeutet. Umgekehrt kann auch vermieden werden, die Spracheingabe zu früh als beendet anzusehen, was zu einer Auswertung einer unvollständigen Anweisung führen und Fehler verursachen kann.

Gemäß einigen Beispielen basieren der Schritt des Erkennens des Beginns und/oder der Schritt des Erkennens des Endes auf der (visuellen) Sprechaktivität und/oder einer erkannten Anwesenheit einer, insbesondere authentifizierten, Person.

So kann ein Anfang der Spracheingabe vorteilhafterweise z.B. anhand eines Beginns einer Sprechaktivität oder einer Anwesenheit einer zur Bedienung autorisierten Person festgestellt werden. Umgekehrt kann die Spracheingabe als beendet angesehen werden, wenn (ggf. nach einer vorbestimmten Wartezeit) keine Sprechaktivität mehr festgestellt wird oder keine autorisierte Person in der Umgebung der Vorrichtung mehr anwesend ist.

Gemäß einem Aspekt umfasst der Schritt des Verarbeitens des Audiosignals ein Erkennen eines akustischen Beginns einer Spracheingabe in dem Audiosignal basierend auf einer Analyse des Audiosignals und ein Erkennen eines akustischen Endes der Spracheingabe in dem Audiosignal basierend auf einer Analyse des Audiosignals, wobei das Erkennen von Beginn und Ende zusätzlich basierend auf dem akustischen Beginn und dem akustischen Ende erfolgen. Insbesondere kann dabei ein Abgleich des akustischen Beginns und des akustischen Endes mit dem basierend auf dem Bildanalyseergebnis erkannten Beginn und Ende erfolgen.

Durch die zusätzliche Berücksichtigung eines akustisch erfassten Beginns bzw. Endes kann das Audiosignal zuverlässig für die weitere Verarbeitung gefiltert werden. Dies erhöht die die Fehlersicherheit der Sprachsteuerung.

Gemäß einem Aspekt umfasst der Schritt des Verarbeitens des Audiosignals ein Erzeugen eines Verifikationssignals basierend auf dem Bildanalyseergebnis zur Bestätigung des Audioanalyseergebnisses, und insbesondere einer in dem Audiosignal enthaltenen Spracheingabe, und der Schritt des Erzeugens des Steuersignals erfolgt basierend auf dem Verifikationssignal.

Das Verifikationssignal kann allgemein dazu geeignet sein, ein Verarbeitungsergebnis des Audiosignals zu verifizieren. Gemäß einigen Beispielen umfasst der Schritt des Erzeugens des Steuersignals ein Identifizieren einer Spracheingabe in dem Audioanalyseergebnis. Gemäß einigen Beispielen umfasst das Audioanalyseergebnis eine in dem Audiosignal identifizierte Spracheingabe. Insbesondere kann ein Steuersignal nur dann erzeugt bzw. in die Vorrichtung eingegeben werden, wenn das Verifikationssignal das Audioanalyseergebnis (eine Spracheingabe) bestätigt.

Indem ein Verifikationssignal basierend auf dem Bildanalyseergebnis erzeugt wird, kann das Audioanalyseergebnis unabhängig überprüft werden. Dies erhöht die Fehlersicherheit und damit die Zuverlässigkeit des Verfahrens.

Gemäß einem Aspekt umfasst das Bildanalyseergebnis ein Erfassen einer Person, und das Verifikationssignal basiert auf einer Anwesenheit der Person (insbesondere in einer Umgebung der Vorrichtung).

Insbesondere kann das Verifikationssignal dazu ausgebildet sein, das Audioanalyseergebnis (eine Spracheingabe) zu bestätigen, wenn eine Person anwesend ist. Insbesondere kann ein Steuersignal nur dann erzeugt bzw. in die Vorrichtung eingegeben werden, wenn eine Anwesenheit einer Person erkannt wurde.

Indem die Anwesenheit ausgewertet wird, bzw. indem ein Erzeugen bzw. Eingeben des Steuersignals nur erfolgt, wenn eine Anwesenheit einer Person erkannt wurde, kann sichergestellt werden, dass eine tatsächliche Spracheingabe vorliegt und nicht etwa Stör- oder Hintergrundgeräusche analysiert werden. Dadurch werden sowohl die Fehlersicherheit als auch die Effizienz des Verfahrens erhöht.

Gemäß einem Aspekt umfasst das Bildanalyseergebnis eine (visuelle) Sprechaktivität einer Person, und das Verifikationssignal basiert auf einer Ermittlung einer zeitlichen Kohärenz der Sprechaktivität und des Audioanalyseergebnisses (insbesondere einer in dem Audioanalyseergebnis enthaltenen Spracheingabe).

Gemäß einem Aspekt umfasst der Schritt des Verarbeitens des Audiosignals ein Erfassen einer (akustischen) Sprechaktivität der Person (z.B. anhand einer Frequenzanalyse des Audiosignals), wobei die zeitliche Kohärenz basierend auf einem Vergleich der visuellen mit der akustischen Sprechaktivität basiert.

Mit anderen Worten kann das Verifikationssignal auf einer Überprüfung basieren, ob eine visuell (basierend auf dem Bildsignal) ermittelte Sprechaktivität mit einer akustisch (basierend auf dem Audiosignal) ermittelten Sprechaktivität zeitlich übereinstimmt. Beispielsweise kann überprüft werden, ob erfasste Lippenbewegungen zeitlich zu einer erkannten Spracheingabe "passen".

Insbesondere kann das Verifikationssignal dazu ausgebildet sein, das Audioanalyseergebnis (eine Spracheingabe) zu bestätigen, wenn die (visuell festgestellte) Sprechaktivität zeitlich kohärent zu dem Audioanalyseergebnis (bzw. einer Spracheingabe bzw. einer akustisch festgestellten Sprechaktivität) ist. Insbesondere kann ein Steuersignal nur dann erzeugt bzw. in die Vorrichtung eingegeben werden, wenn eine zeitliche Kohärenz zwischen der (visuell festgestellten) Sprechaktivität und dem Audioanalyseergebnis (bzw. einer Spracheingabe bzw. einer akustisch festgestellten Sprechaktivität) erkannt wurde.

Mit der Überprüfung einer zeitlichen Kohärenz kann sichergestellt werden, dass eine tatsächliche Spracheingabe vorliegt. Dadurch werden sowohl die Fehlersicherheit als auch die Effizienz des Verfahrens erhöht.

Gemäß einem Aspekt umfasst das Bildanalyseergebnis eine Identität einer Person, und das Verifikationssignal basiert auf einem Authentifizieren der Person als für die Bedienung der Vorrichtung autorisiert basierend auf der Identität.

Mit anderen Worten erfolgt ein visuelles Authentifizieren der Person zum Verifizieren des Audioanalyseergebnisses (bzw. einer Spracheingabe). Dadurch kann überprüft werden, ob die Spracheingabe einer autorisierten Person ausgewertet wird. Insbesondere kann ein Steuersignal nur dann erzeugt bzw. in die Vorrichtung eingegeben werden, wenn die Person als für die Bedienung der Vorrichtung autorisiert authentifiziert wurde. Dadurch kann die Bediensicherheit des Verfahrens erhöht werden.

Gemäß einem Aspekt umfasst das Bildanalyseergebnis eine Sprechaktivität einer Person und eine Identität der Person, und das Verifikationssignal basiert auf einem Authentifizieren der Person als für die Bedienung der Vorrichtung autorisiert basierend auf der Identität.

Dadurch kann gezielt geprüft werden, ob die Person, die gerade spricht, zur Bedienung der Vorrichtung autorisiert ist, was die Bediensicherheit weiter erhöht.

Gemäß einem Aspekt kann das Verifikationssignal zusätzlich auf einer Ermittlung einer zeitlichen Kohärenz der Sprechaktivität und des Audioanalyseergebnisses (insbesondere einer in dem Audioanalyseergebnis enthaltenen Spracheingabe der Person) basieren.

Gemäß einem Aspekt umfasst das Verarbeiten des Audiosignals ein Feststellen einer akustischen Identität der Person (z.B. basierend auf einer Frequenzanalyse des Audiosignals), wobei das Verifikationssignal auf einem Vergleich der Identität mit der akustischen Identität erfolgt, wobei ein Authentifizieren der Person als für die Bedienung der Vorrichtung autorisiert insbesondere nur dann erfolgt, wenn die akustische Identität und die Identität übereinstimmen. Dadurch kann die Bediensicherheit weiter gesteigert werden.

Gemäß einem Aspekt wird eine Sprachanalysevorrichtung (bzw. ein Sprachsteuermodul) zur Sprachsteuerung einer Vorrichtung bereitgestellt, die eine Schnittstelle und einer Steuerungsvorrichtung aufweist. Die Schnittstelle ist zum Empfangen eines mit einer Audioerfassungseinrichtung erfassten Audiosignals und eines mit einer Bilderfassungseinrichtung erfassten Bildsignals aus einer Umgebung der Vorrichtung ausgebildet. Die Steuerungsvorrichtung ist dazu ausgebildet, das Bildsignals zur Bereitstellung eines Bildanalyseergebnisses zu analysieren, das Audiosignal unter Verwendung des Bildanalyseergebnisses zur Bereitstellung eines Audioanalyseergebnisses zu verarbeiten, ein Steuersignal zur Steuerung der Vorrichtung basierend auf dem Audioanalyseergebnis zu erzeugen, und das Steuersignal in die Vorrichtung einzugeben.

Die Steuerungsvorrichtung kann als zentrale oder dezentrale Recheneinheit ausgebildet sein. Die Recheneinheit kann einen oder mehrere Prozessoren aufweisen. Die Prozessoren können als zentrale Verarbeitungseinheit (ein englischer Fachausdruck hierfür ist "central processing unit", kurz CPU) und/oder als Grafikprozessor (ein englischer Fachausdruck hierfür ist "graphics processing unit", kurz GPU) ausgebildet sein. Insbesondere kann die Steuerungsvorrichtung als eine, oder als Teil einer, durch Spracheingabe zu steuernde gegenständliche Vorrichtung implementiert sein. Alternativ kann die Steuerung als lokaler, realer und/oder Cloud-basierter Verarbeitungsserver implementiert sein. Ferner kann die Steuerung ein oder mehrere virtuelle Maschinen umfassen. Gemäß weiteren Implementierungen weist die Sprachanalysevorrichtung ferner ein Spracherkennungsmodul auf, das dazu ausgebildet ist, ein oder mehrere Sprachbefehle/Steuersignale basierend auf dem Audioanalyseergebnis zu ermitteln.

Die Schnittstelle kann allgemein zum Datenaustausch zwischen der Steuerungsvorrichtung und weiteren Komponenten ausgebildet sein. Die Schnittstelle kann in Form von einer oder mehreren einzelnen Datenschnittstellen implementiert sein, welche ein Hardware- und/oder Software-Interface, z.B. einen PCI-Bus, eine USB-Schnittstelle, eine Fire-Wire-Schnittstelle, eine ZigBee- oder eine Bluetooth-Schnittstelle aufweisen können. Die Schnittstelle kann ferner eine Schnittstelle eines Kommunikationsnetzwerks aufweisen, wobei das Kommunikationsnetzwerk ein Local Area Network (LAN), beispielsweise ein Intranet oder ein Wide Area Network (WAN) aufweisen kann. Entsprechend können die ein oder mehreren Datenschnittstellen eine LAN-Schnittstelle oder eine Wireless LAN-Schnittstelle (WLAN oder Wi-Fi) aufweisen. Die Schnittstelle kann ferner zur Kommunikation mit der Bedienperson über eine Nutzerschnittstelle ausgebildet sein. Entsprechend kann die Steuerung dazu ausgebildet sein, Sprachbefehle über die Nutzerschnittstelle anzuzeigen und diesbezügliche Nutzereingabe über die Nutzerschnittstelle zu empfangen. Insbesondere kann die Schnittstelle eine akustische Audioerfassungseinrichtung zur Registrierung des Audiosignals und/oder eine Bilderfassungseinrichtung umfassen.

Die Vorteile der vorgeschlagenen Vorrichtung entsprechen im Wesentlichen den Vorteilen des vorgeschlagenen Verfahrens. Merkmale, Vorteile oder alternative Ausführungsformen/Aspekte können ebenso auf die anderen beanspruchten Gegenstände übertragen werden und umgekehrt.

Gemäß einem weiteren Aspekt wird ein medizinisches System bereitgestellt, das eine Sprachanalysevorrichtung nach dem vorhergehenden Aspekt und eine vorgenannte medizinische Vorrichtung zur Durchführung einer medizinischen Prozedur umfasst.

Die Erfindung betrifft in einem weiteren Aspekt ein Computerprogrammprodukt, das ein Programm umfasst und direkt in einen Speicher einer programmierbaren Steuerung ladbar ist und Programmmittel, z.B. Bibliotheken und Hilfsfunktionen, aufweist, um ein Verfahren gemäß den hierin beschriebenen Aspekten/Beispielen/Implementierungen/Ausführungsformen auszuführen, wenn das Computerprogrammprodukt ausgeführt wird. Ferner betrifft die Erfindung in einem weiteren Aspekt ein computerlesbares Speichermedium, auf welchem lesbare und ausführbare Programmabschnitte gespeichert sind, um alle Schritte eines Verfahrens gemäß den hierin beschriebenen Aspekten/Beispielen/Implementierungen/Ausführungsformen auszuführen, wenn die Programmabschnitte von dem der Steuerung ausgeführt werden.

Die Computerprogrammprodukte können dabei eine Software mit einem Quellcode, der noch kompiliert und gebunden oder der nur interpretiert werden muss, oder einen ausführbaren Softwarecode umfassen, der zur Ausführung nur noch in die Verarbeitungseinheit zu laden ist. Durch die Computerprogrammprodukte können die Verfahren schnell, identisch wiederholbar und robust ausgeführt werden. Die Computerprogrammprodukte sind so konfiguriert, dass sie mittels der Recheneinheit die erfindungsgemäßen Verfahrensschritte ausführen können. Die Recheneinheit muss dabei jeweils die Voraussetzungen wie beispielsweise einen entsprechenden Arbeitsspeicher, einen entsprechenden Prozessor, eine entsprechende Grafikkarte oder eine entsprechende Logikeinheit aufweisen, sodass die jeweiligen Verfahrensschritte effizient ausgeführt werden können.

Die Computerprogrammprodukte sind beispielsweise auf einem computerlesbaren Speichermedium gespeichert oder auf einem Netzwerk oder Server hinterlegt, von wo sie in den Prozessor der jeweiligen Recheneinheit geladen werden können, der mit der Recheneinheit direkt verbunden oder als Teil der Recheneinheit ausgebildet sein kann. Weiterhin können Steuerinformationen der Computerprogrammprodukte auf einem computerlesbaren Speichermedium gespeichert sein. Die Steuerinformationen des computerlesbaren Speichermediums können derart ausgebildet sein, dass sie bei Verwendung des Datenträgers in einer Recheneinheit ein erfindungsgemäßes Verfahren durchführen. Beispiele für computerlesbaren Speichermedium sind eine DVD, ein Magnetband oder ein USB-Stick, auf welchem elektronisch lesbare Steuerinformationen, insbesondere Software, gespeichert ist. Wenn diese Steuerinformationen von dem Datenträger gelesen und in eine Recheneinheit gespeichert werden, können alle erfindungsgemäßen Ausführungsformen/Aspekte der vorab beschriebenen Verfahren durchgeführt werden. So kann die Erfindung auch von dem besagten computerlesbaren Medium und/oder dem besagten computerlesbaren Speichermedium ausgehen. Die Vorteile der vorgeschlagenen Computerprogrammprodukte bzw. der zugehörigen computerlesbaren Medien entsprechen im Wesentlichen den Vorteilen der vorgeschlagenen Verfahren.

Weitere Besonderheiten und Vorteile der Erfindung werden aus den nachfolgenden Erläuterungen von Ausführungsbeispielen anhand von schematischen Zeichnungen ersichtlich. In diesem Zusammenhang genannte Modifikationen können jeweils miteinander kombiniert werden, um neue Ausführungsformen auszubilden. In unterschiedlichen Figuren werden für gleiche Merkmale die gleichen Bezugszeichen verwendet.

Es zeigen:
Fig. 1 ein schematisches Blockdiagramm eines Systems zur Steuerung einer medizinischen Vorrichtung gemäß einer Ausführungsform;
Fig. 2 ein schematisches Blockdiagramm eines Systems zur Steuerung einer medizinischen Vorrichtung gemäß einer weiteren Ausführungsform;
Fig. 3 ein schematisches Ablaufdiagramm eines Verfahrens zur Steuerung einer medizinischen Vorrichtung gemäß einer Ausführungsform; und
Fig. 4 ein schematisches Ablaufdiagramm eines Verfahrens zur Steuerung einer medizinischen Vorrichtung gemäß einer Ausführungsform.

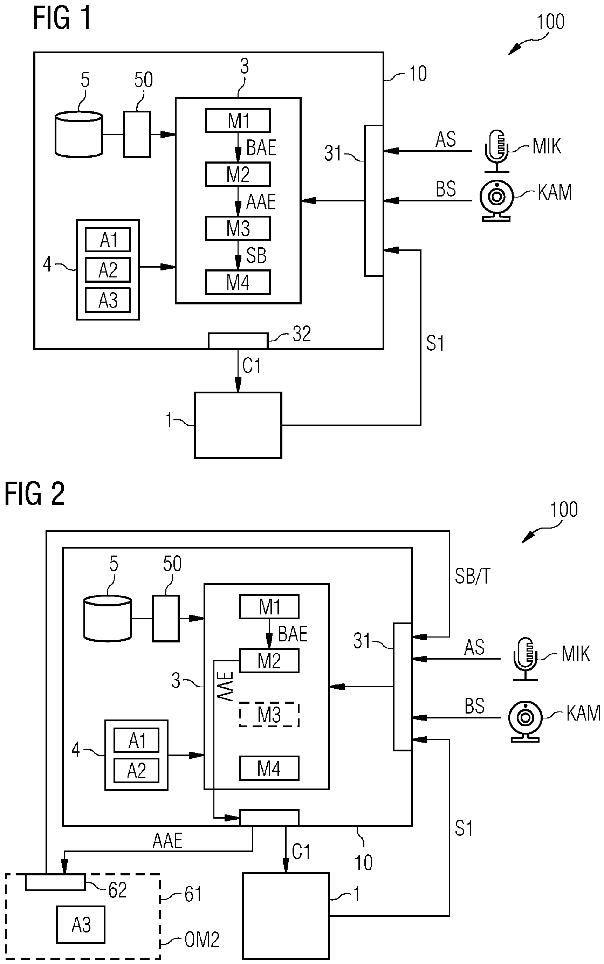

**Figur 1** zeigt schematisch eine funktionale Blockdarstellung eines Systems 100 zur Durchführung einer medizinischen Prozedur an einem Patienten. Das System 100 weist eine medizinische Vorrichtung 1 zur Durchführung einer medizinischen Prozedur an einem Patienten auf. Die medizinische Prozedur kann eine bildgebende und/oder interventionelle und/oder therapeutische Prozedur umfassen.

Insbesondere kann die medizinische Vorrichtung 1 eine bildgebende Modalität umfassen. Die bildgebende Modalität kann allgemein dazu ausgebildet sein, einen anatomischen Bereich eines Patienten abzubilden, wenn dieser in einen Erfassungsbereich der bildgebenden Modalität gebracht wird. Die bildgebende Modalität ist beispielsweise ein Magnetresonanzgerät, ein Einzelphotonenemissionstomographie-Gerät (SPECT-Gerät), ein Positronen-Emissions-Tomographie-Gerät (PET-Gerät), ein Computertomograph, ein Ultraschall-Gerät, ein Röntgengerät oder ein als C-Bogen-Gerät ausgebildetes Röntgengerät. Die bildgebende Modalität kann auch ein kombiniertes medizinisches Bildgebungsgerät sein, welches eine beliebige Kombination aus mehreren der genannten bildgebenden Modalitäten umfasst.

Ferner kann die medizinische Vorrichtung eine Interventions- und/oder Therapievorrichtung aufweisen. Die Interventions- und/oder Therapievorrichtung kann allgemein dazu ausgebildet sein, eine interventionelle und/oder therapeutische medizinische Prozedur an dem Patienten durchzuführen. Beispielsweise kann die Interventions- und/oder Therapievorrichtung eine Biopsievorrichtung zur Entnahme einer Gewebeprobe, eine Strahlen- bzw. Radiotherapievorrichtung zur Bestrahlung eines Patienten, und/oder eine Eingriffsvorrichtung zur Durchführung eines, insbesondere minimalinvasiven, Eingriffs sein. Gemäß Ausführungsformen kann die Interventions- und/oder Therapievorrichtung automatisiert oder wenigstens teil-automatisiert sowie insbesondere robotergesteuert sein. Die Strahlen- bzw.

Radiotherapievorrichtung kann beispielsweise einen medizinischen Linearbeschleuniger oder eine andere Strahlenquelle aufweisen. Beispielsweise kann die Eingriffsvorrichtung einen Katheterroboter, minimalinvasiven chirurgischen Roboter, einen Endoskopieroboter usw. aufweisen. Gemäß weiteren Ausführungsformen kann die medizinische Vorrichtung 1 zusätzlich oder alternativ Module aufweisen, welche die Durchführung einer medizinischen Prozedur unterstützen, wie etwa eine insbesondere wenigstens teil-automatisiert steuerbare Patientenlagerungsvorrichtung und/oder Überwachungsgeräte zur Überwachung eines Zustands des Patienten, wie etwa ein EKG-Gerät, und/oder ein Patientenversorgungsgerät, wie etwa ein Beatmungsgerät, ein Infusionsgerät und/oder ein Dialysegerät.

Ein oder mehrere Komponenten der medizinischen Vorrichtung 1 sollen gemäß Ausführungsformen der Erfindung durch eine Spracheingabe einer Bedienperson ansteuerbar sein. Dazu weist das System 100 eine Audioerfassungseinrichtung MIK und eine Sprachanalysevorrichtung 10 auf.

Die Audioerfassungseinrichtung MIK dient zum Aufnehmen oder Erfassen eines Audiosignals AS, das gesprochener Laute umfassen kann, die von einer Bedienperson des System 100 erzeugt werden. Die Audioerfassungseinrichtung MIK kann beispielsweise als Mikrophon realisiert sein. Die Audioerfassungseinrichtung MIK kann beispielsweise an der medizinische Vorrichtung 1 oder an anderer Stelle, wie in einem Bedienraum, stationär angeordnet sein. Alternativ kann die Audioerfassungseinrichtung MIK auch portabel realisiert sein, z.B. als Mikrophon eines Headsets, das von der Bedienperson mitführbar ist. In diesem Fall weist die Audioerfassungseinrichtung MIK vorteilhaft einen Sender zur drahtlosen Datenübertragung auf. Gemäß anderen Ausführungsformen ist die Audioerfassungseinrichtung MIK in eine Nutzerschnittstelle der medizinischen Vorrichtung integriert, wie etwa einen Bildschirm eines Desktop-PCs, ein Tablet oder einen Laptop.

Gemäß einigen Ausführungsformen kann die Audioerfassungseinrichtung MIK dazu ausgebildet sein, eine Quelle eines Geräuschs oder Lauts, insbesondere einer Spracheingabe, in dem Audiosignals AS räumlich zu erfassen. Dazu kann die Audioerfassungseinrichtung MIK beispielsweise mehrere einzelne Mikrophone und/oder ein Richtmikrophon aufweisen. In dem Audiosignal AS sind dann die Orte einzelner Quellen codiert, die durch geeignete Sprachauswertung ausgewertet werden können.

Um das Audiosignal AS bzw. dessen Auswertung zu verifizieren, umfasst das erfindungsgemäße System 100 eine Bildererfassungseinrichtung KAM.

Die Bilderfassungseinrichtung KAM ist zum Aufnehmen bzw. Erfassen eines Bildsignals BS ausgebildet. Insbesondere enthält das Bildsignal BS eine Aufnahme der Bedienperson. Dazu kann die Bilderfassungseinrichtung KAM dazu ausgebildet sein, dass sie auf eine Bedienperson ausgerichtet werden kann. Gemäß Ausführungsformen kann die Bilderfassungseinrichtung KAM dazu ausgebildet sein, einem Audiosignals AS zu folgen bzw. eine Quelle eines Audiosignals zu identifizieren und die Bilderfassungseinrichtung KAM auf die Quelle auszurichten.

Die Bilderfassungseinrichtung KAM kann beispielsweise an der medizinische Vorrichtung 1 oder an anderer Stelle, wie in einem Bedienraum, stationär angeordnet sein. Gemäß anderen Ausführungsformen ist die Audioerfassungseinrichtung MIK in eine Nutzerschnittstelle der medizinischen Vorrichtung integriert, wie etwa einen Bildschirm eines Desktop-PCs, ein Tablet oder einen Laptop. Ferner kann die Bilderfassungseinrichtung KAM mit der Audioerfassungseinrichtung MIK integriert sein.

Die Sprachanalysevorrichtung 10 weist einen Eingang 31 zum Empfang von Signalen und einen Ausgang 32 zum Bereitstellen von Signalen auf. Der Eingang 31 und der Ausgang 32 können eine Schnittstelleneinrichtung der Sprachanalysevorrichtung 10 bilden. Die Sprachanalysevorrichtung 10 ist allgemein zur Durchführung von Datenverarbeitungsprozessen und zur Erzeugung elektrischer Signale eingerichtet. Hierzu kann die Sprachanalysevorrichtung 10 eine Recheneinheit 3 aufweisen. Die Recheneinheit 3 kann z.B. einen Prozessor, z.B. in Form einer CPU oder dergleichen umfassen. Die Recheneinheit 3 kann als eine zentrale Steuereinheit, z.B. als eine Steuereinheit mit einem oder mehreren Prozessoren ausgebildet sein. Insbesondere kann die Recheneinheit 3 als Steuerungsrechner der medizinischen Vorrichtung 1 oder als ein Teil desselben ausgebildet sein. Gemäß weiteren Implementierungen können Funktionalitäten und Komponenten der Recheneinheit 3 in einer dezentralisierten Weise über mehrere Recheneinheiten oder Steuerungen des Systems 100 verteilt sein.

Ferner weist die Sprachanalysevorrichtung 10 einen Datenspeicher 4 auf, und zwar insbesondere einen durch die Recheneinheit 3 lesbaren, nicht-flüchtigen Datenspeicher wie eine Festplatte, eine CD-ROM, eine DVD, eine Blu-Ray Disc, eine Diskette, einen Flash-Speicher oder dergleichen. Auf dem Datenspeicher 4 kann allgemein Software A1, A2, A3 gespeichert sein, die dazu eingerichtet ist, die Recheneinheit 3 zur Durchführung der Schritte eines hierin beschriebenen Verfahrens zu veranlassen.

Wie in Figur 1 schematisch dargestellt, ist der Eingang 31 der Sprachanalysevorrichtung 10 mit der Audioerfassungseinrichtung MIK, der Bilderfassungseinrichtung KAM und mit der medizinische Vorrichtung 1 verbunden. Der Eingang 31 kann zur drahtlosen oder zur drahtgebundenen Datenkommunikation eingerichtet sein. Beispielsweise kann der Eingang 31 einen Bus-Anschluss aufweisen. Alternativ oder zusätzlich zu einem drahtgebundenen Anschluss kann der Eingang 31 auch eine Schnittstelle zur drahtlosen Datenübertragung aufweisen. Als eine solche Schnittstelle kann beispielsweise eine WIFI-Schnittstelle, eine Bluetooth-Schnittstelle oder dergleichen vorgesehen sein.

Ferner kann an dem Eingang 31 ein Systemzustand S1 der medizinischen Vorrichtung 1 bereitgestellt werden. Der Systemzustand S1 kann beispielsweise durch einen Status der medizinischen Vorrichtung 1 gegeben sein, wie etwa einen Standby-Zustand, Vorbereitungszustand zur Durchführung einer vorbestimmten Operation oder einen Zustand der Durchführung einer vorbestimmten Operation. Allgemein ist der Systemzustand S1 durch einen jeweiligen Arbeitsschritt oder eine Abfolge bzw. Sequenz von Arbeitsschritten festgelegt, welche die medizinischen Vorrichtung 1 gerade ausführt oder ausführen soll. Daraus ergibt sich, welche weiteren Arbeitsschritte die medizinischen Vorrichtung 1 potenziell durchführen könnte und damit, wie sie betätigbar ist und wie zeitkritisch eine Betätigung ist. Beispielsweise kann der Systemzustand S1 als Eingangsgröße einem Look-up-Table zugeführt werden, in welchem die für verschiedene Systemzustände notwendigen Informationen für die Ansteuerung der medizinischen Vorrichtung 1 enthalten sind. Diesen Systemzustand S1 stellt die medizinische Vorrichtung 1 am Eingang 31 der Sprachanalysevorrichtung 10 bereit, z.B. als Datensignal.

Der Ausgang 32 der Sprachanalysevorrichtung 10 ist mit der medizinische Vorrichtung 1 verbunden. Der Ausgang 32 kann zur drahtlosen oder zur drahtgebundenen Datenkommunikation eingerichtet sein. Beispielsweise kann der Ausgang 32 einen Bus-Anschluss aufweisen. Alternativ oder zusätzlich zu einem drahtgebundenen Anschluss kann der Ausgang 32 auch eine Schnittstelle zur drahtlosen Datenübertragung aufweisen, beispielsweise eine WIFI-Schnittstelle, eine Bluetooth-Schnittstelle oder dergleichen.

Die Sprachanalysevorrichtung 10 ist dazu eingerichtet, ein oder mehrere Steuersignale C1 zur Steuerung der medizinischen Vorrichtung 1 zu erzeugen und an dem Ausgang 32 bereitzustellen. Das Steuersignal C1 veranlasst die medizinische Vorrichtung 1 zur Durchführung eines bestimmten Arbeitsschritts oder einer Sequenz von Schritten. Am Beispiel einer als MR-Gerät ausgeführten bildgebenden Modalität können sich solche Schritte beispielsweise auf die Durchführung einer bestimmten Scansequenz mit einer bestimmten Anregung von Magnetfeldern durch einen Erzeugerkreis des MR-Geräts beziehen. Ferner können sich solche Schritte auf ein Verfahren von verfahrbaren Systemkomponenten der medizinischen Vorrichtung 1 beziehen, wie etwa dem Verfahren einer Patientenlagerungsvorrichtung oder dem Verfahren von Emissions- oder Detektor-Komponenten einer bildgebenden Modalität.

Zur Bereitstellung der ein oder mehreren Steuersignale C1 kann die Recheneinheit 3 verschiedene Module M1-M4 aufweisen.

Ein erstes Modul M1, das im Folgenden als Bildanalysemodul M1 bezeichnet wird, ist dazu ausgebildet, aus dem Bildsignal BS ein Bildanalyseergebnis BAE zu ermitteln. Das Bildanalyseergebnis BAE ist dabei dazu geeignet, die nachfolgende Sprachanalyse durch die weiteren Module M2, M3, M4 zu erleichtern bzw. zu verifizieren. Insbesondere kann das Bildanalyseergebnis BAE eine visuelle Identität der Bedienperson oder eine visuelle Sprechaktivität der Bedienperson umfassen. Dazu kann das Bildanalysemodul M1 dazu ausgebildet sein, einen Bild- oder Videoanalysealgorithmus A1 auf das Bildsignal BS anzuwenden. Der Bildanalysealgorithmus A1 kann beispielsweise eine Gesichtserkennungsfunktion umfassen, mit der sich eine Identität oder eine Lippenbewegung einer Person erfassen lassen.

Ein weiteres Modul M2, das im Folgenden als Sprachanalysemodul M2 bezeichnet wird, ist dazu ausgebildet, aus dem Audiosignal AS ein Audioanalyseergebnis AAE zu ermitteln. Dabei ist das Sprachanalysemodul M2 dazu ausgebildet, das Audioanalyseergebnis AAE unter Berücksichtigung des Bildanalyseergebnis BAE zu bestimmen. Insbesondere kann das Sprachanalysemodul M2 dazu ausgebildet sein, einen Sprachdatenstrom zu bestimmen (zu errechnen), der die relevanten Sprachbefehle der Bedienperson enthält. Insbesondere ist das Sprachanalysemodul M2 dazu ausgebildet, mittels fortlaufender Analyse des Audiosignals AS unter Verwendung des Bildanalyseergebnisses BAE einen Anfang und ein Ende einer zur Steuerung der medizinischen Vorrichtung 1 relevanten gesprochenen Äußerung (Spracheingabe) innerhalb des Audiosignals AS festzulegen und basierend auf dem Audiosignal AS zwischen dem Anfang und dem Ende den Sprachdatenstrom bereitzustellen. Hierfür kann das Sprachanalysemodul M2 dazu ausgebildet sein, eine mit dem Bildanalyseergebnis BEA bereitgestellte Sprechaktivität dazu zu verwenden, das Audiosignal AS geeignet zu trunkieren.

Ferner kann das Sprachanalysemodul M2 dazu ausgebildet sein, eine in dem Audioanalyseergebnis AAE enthaltene Spracheingabe zu verifizieren. Dies kann beispielsweise umfassen, eine mit dem Bildanalyseergebnis BAE bereitgestellte Identität eines Sprechers für eine Überprüfung zu verwenden, ob der Sprecher für die Steuerung der Vorrichtung 1 autorisiert ist. Ferner kann das Sprachanalysemodul M2 dazu ausgebildet sein, das Audioanalyseergebnis AAE dahingehend zu verifizieren, dass z.B. der Sprachdatenstrom mit einer Sprechaktivität übereinstimmt. Basierend auf derlei Prüfschritten kann das Sprachanalysemodul M2 eine Verifizierungssignal bereitstellen, das bei der Umsetzung des Audioanalyseergebnisses AEE in einen Steuerbefehl berücksichtigt werden kann.

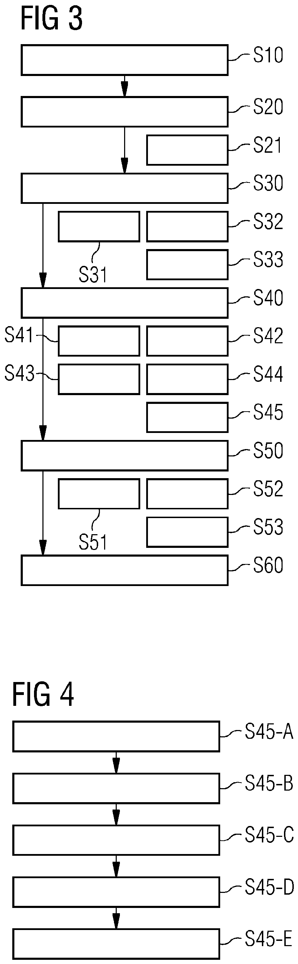

Zur Durchführung der vorgenannten Aufgaben kann das Sprachanalysemodul M2 dazu ausgebildet sein, einen Audioanalysealgorithmus A2 (erster Computerlinguistik-Algorithmus) auf das Audiosignal AS anzuwenden. Insbesondere kann das Sprachanalysemodul M2 (z.B. durch Ausführen des Audioanalysealgorithmus A2) dazu ausgebildet sein, die Verfahrensschritte S41 bis S46 auszuführen (vgl. Figur 3).

Das Audioanalyseergebnis AAE und/oder das Verifikationssignal können anschließend in ein weiteres Modul M3 der Recheneinheit 3 eingegeben werden, das nachfolgend auch als Spracherkennungsmodul M3 bezeichnet wird. Das Spracherkennungsmodul M3 ist dazu ausgebildet, basierend auf dem Audioanalyseergebnis AAE ein oder mehrere Sprachbefehle SB zu identifizieren. Dazu kann das Spracherkennungsmodul M3 einen Spracherkennungsalgorithmus A3 (zweiter Computerlinguistik-Algorithmus) auf den Audioanalyseergebnis AAE anwenden, welcher Spracherkennungsalgorithmus A3 dazu ausgebildet ist, z.B. in Sprachdatenströmen, einen oder mehrere Sprachbefehle zu erkennen. Im Gegensatz zum Sprachanalysemodul M2 analysiert das Spracherkennungsmodul M3 das bereitgestellte Signal bevorzugt nicht fortlaufend (also quasi in Echtzeit), sondern geschlossen als Ganzes. Dies hat den Vorteil eines genaueren Analyseergebnisses. Insbesondere können so Worteinbettungen systematischer erfasst werden (und nicht nur rückgerichtet ausgehend von einem aktuellen Wort).

Beispielsweise kann der Spracherkennungsalgorithmus A3 dazu ausgebildet sein, zu ermitteln, ob dem Audioanalyseergebnis AAE ein oder mehrere in einer Befehlsbibliothek 50 der medizinischen Vorrichtung 1 enthaltene Sprachbefehle zuordenbar sind. Dies kann Regel-basiert anhand der Signaleigenschaften des Audioanalyseergebnis AAE erfolgen. Die Befehlsbibliothek 50 kann eine Auswahl an Sprachbefehlen SB enthalten, denen jeweils eine oder mehrere Signalteile des Audioanalyseergebnisen AAE der Bedienperson zuordenbar sind. Ein Signalteil kann dabei eine sprachliche Äußerung der Bedienperson bestehend aus ein oder mehreren Wörtern sein. Gemäß einigen Implementierungen kann die Befehlsbibliothek 50 ferner eine Auswahl an Sprachbefehlen SB für die medizinische Vorrichtung 1 enthalten, die in Abhängigkeit des aktuellen Systemzustands S1 der medizinischen Vorrichtung 1 aus einer Befehlsdatenbank 5 geladen wird. Die Befehlsbibliothek 50 wird dann temporär für einen jeweiligen Systemzustand S1 generiert und kann beispielsweise als temporäre Datei in einen Arbeitsspeicher der Recheneinheit 3 geladen werden. Der Inhalt der Befehlsbibliothek 50, also die einzelnen Datensätze, in denen jeweils ein Sprachbefehl mit einer oder mehreren Signalmustern bzw. sprachlichen Äußerungen verknüpft ist, wird aus der Befehlsdatenbank 5 geladen. Welche Datensätze aus der Befehlsdatenbank 5 in die Befehlsbibliothek 50 geladen werden, kann vom Systemzustand S1 der medizinischen Vorrichtung 1 abhängen. Beispielsweise kann die medizinische Vorrichtung 1 bei der Durchführung einer bestimmten Operation lediglich bestimmte andere oder weitere Arbeitsschritte ausführen. Diese Information kann in der Befehlsdatenbank 5 zusammen mit einem Sprachbefehl SB, welcher die Erzeugung eines dem Arbeitsschritt entsprechenden Steuerkommandos C1 bewirkt, hinterlegt sein.

Gemäß einigen Implementierungen kann der Spracherkennungsalgorithmus A3 eine durch maschinelles Lernen trainierte Erkennungsfunktion als Software aufweisen. Die Erkennungsfunktion kann dazu ausgebildet sein, ein oder mehrere sprachliche Äußerungen in dem Audioanalyseergebnis AAE zu erkennen und ein entsprechendes Erkennungssignal bereitzustellen. Gemäß einigen Ausführungsformen kann der Spracherkennungsalgorithmus A3 auf einem sog. Transformer-Netzwerk basieren oder ein solches umfassen.

Die Sprachbefehle SB werden in ein weiteres Modul M4 eingegeben, welches im Weiteren auch als Befehlsausgabemodul M4 bezeichnet wird. Das Befehlsausgabemodul M4 ist dazu ausgebildet, basierend auf den Sprachbefehlen SB ein oder mehrere Steuersignale C1 bereitzustellen, die dazu geeignet sind, die medizinische Vorrichtung 1 entsprechend den identifizierten Sprachbefehlen SB zu steuern.

Die vorgenommene Unterteilung in Module M1-M4 dient dabei lediglich der einfacheren Erklärung der Funktionsweise der Recheneinheit 3 und ist nicht beschränkend zu verstehen. Die Module M1-M4 bzw. deren Funktionen können auch in einem Element zusammengefasst sein. Die Module M1-M4 können dabei insbesondere auch als Computerprogrammprodukte oder Computerprogrammsegmente aufgefasst werden, welche bei der Ausführung in der Recheneinheit 3 ein oder mehrere der nachstehend beschriebenen Funktionen oder Verfahrensschritte realisieren.

**Figur 2** zeigt schematisch eine funktionale Blockdarstellung eines Systems 100 zur Durchführung einer medizinischen Prozedur an einem Patienten gemäß einer weiteren Ausführungsform. Die in Figur 2 gezeigte Ausführungsform unterscheidet sich von der in Figur 1 gezeigten Ausführungsform darin, dass die Funktionalitäten des Spracherkennungsmoduls M3 zumindest teilweise in ein Online-Spracherkennungsmodul OM2 ausgelagert sind. Ansonsten bezeichnen gleiche Bezugszeichen gleiche oder funktionsgleiche Komponenten.

Das Online-Spracherkennungsmodul OM2 kann auf einem Server 61 abgelegt sein, mit dem die Sprachanalysevorrichtung 10 über eine Internetverbindung und eine Schnittstelle 62 des Servers 61 in Datenaustausch treten kann. Die Sprachanalysevorrichtung 10 kann entsprechend dazu ausgebildet sein, dem Online-Spracherkennungsmodul OM2 das Audioanalyseergebnis AAE zu übermitteln. Das Online-Spracherkennungsmodul OM2 kann dazu ausgebildet sein, basierend auf dem Audioanalyseergebnis AAE direkt ein oder mehrere Sprachbefehle SB zu identifizieren und der Sprachanalysevorrichtung 10 zurückzugeben. Entsprechend kann das Online-Spracherkennungsmodul OM2 dazu ausgebildet sein, den Spracherkennungsalgorithmus A2 in einem geeigneten Online-Speicher verfügbar zu machen. Das Online-Spracherkennungsmodul OM2 kann dabei als zentralisierte Einrichtung aufgefasst werden, welche Spracherkennungsdienste für mehrere, insbesondere lokale Clients bereitstellt (die Sprachanalysevorrichtung 10 kann in diesem Sinne als lokaler Client aufgefasst werden). Die Verwendung eines zentralen Online-Spracherkennungsmoduls OM2 kann dahingehend vorteilhaft sein, dass leistungsfähigere Algorithmen angewandt und mehr Rechenleistung aufgebracht werden können.

In alternativen Implementierungen kann das Online-Spracherkennungsmodul OM2 auch "lediglich" ein Transkript T des Audioanalyseergebnis AAE zurückgeben. Das Transkript T kann dann maschinen-verwertbaren Text enthalten, in den das Audioanalyseergebnis AAE umgewandelt wurde. Auf Grundlage dieses Transkripts T kann dann beispielsweise das Modul M3 der Recheneinheit 3 die Sprachbefehle SB identifizieren. Eine solche Ausgestaltung kann dann von Vorteil sein, wenn die Sprachbefehle SB von den Gegebenheiten der medizinischen Vorrichtung 1 abhängen, auf die das Online-Spracherkennungsmodul OM2 keinen Zugriff hat und/oder für deren Berücksichtigung das Online-Spracherkennungsmodul OM2 nicht vorbereitet wurde. Man bedient sich dann der Leistungsfähigkeit des Online-Spracherkennungsmoduls OM2 zur Erstellung des Transkripts T, bestimmt die Sprachbefehle aber ansonsten innerhalb der Sprachanalysevorrichtung 10. Je nach Ausgestaltung des Online-Spracherkennungsmoduls OM2 ist das Modul M3 optional, weshalb es in Figur

Eine Steuerung der medizinischen Vorrichtung 1 kann in den in Figuren 1 und 2 beispielhaft dargestellten Systemen 100 durch ein Verfahren erfolgen, welches in **Figur 3** beispielhaft als Flussdiagramm dargestellt ist. Die Reihenfolge der Verfahrensschritte ist weder durch die dargestellte Abfolge noch durch die gewählte Nummerierung beschränkt. So kann die Reihenfolge der Schritte ggf. vertauscht und einzelne Schritte können weggelassen werden.

Allgemein ist hierbei vorgesehen, dass die Bedienperson, welche die medizinische Vorrichtung 1 bedient, ein Kommando stimmlich bzw. sprachlich äußert, z.B. indem sie einen Satz wie "Starte Scansequenz X" oder "bringe Patient in Ausgangsposition" spricht, die Eingabevorrichtung 2 ein zugehöriges Audiosignal AS erfasst und verarbeitet, und die Sprachanalysevorrichtung 10 das erfasste Audiosignal AS analysiert und ein entsprechendes Steuerkommando C1 zur Betätigung der medizinischen Vorrichtung 1 erzeugt. Ein Vorteil dieses Vorgehens ist, dass die Bedienperson während des Sprechens auch andere Aufgaben erledigen kann, z.B. sich mit der Vorbereitung des Patienten befassen. Dies beschleunigt vorteilhaft die Arbeitsabläufe. Ferner kann die medizinische Vorrichtung 1 dadurch zumindest teilweise "berührungslos" gesteuert werden, wodurch die Hygiene an der medizinische Vorrichtung 1 verbessert wird.

In Schritt S10 erfolgt ein Erfassen eines Audiosignals AS mittels der Audioerfassungseinrichtung MIK. Das Audiosignal AS kann der Sprachanalysevorrichtung 10 am Eingang 31 bereitgestellt werden bzw. die Sprachanalysevorrichtung 10 kann das Audiosignal AS über den Eingang 31 empfangen.

In Schritt S20 erfolgt ein Erfassen eines Bildsignals BS mittels der Bilderfassungseinrichtung KAM. Das Bildsignal BS kann der Sprachanalysevorrichtung 10 am Eingang 31 bereitgestellt werden bzw. die Sprachanalysevorrichtung 10 kann das Bildsignal BS über den Eingang 31 empfangen.

In einem optionalen Teilschritt S21 kann die Bilderfassungseinrichtung KAM auf eine Bedienperson ausgerichtet werden, um diese aufzunehmen. Dazu kann z.B. die Sprachanalysevorrichtung 10 dazu ausgebildet sein, eine in dem Audiosignal AS enthaltene Quelle einer Spracheingaben zu erkennen und die Bilderfassungseinrichtung KAM darauf auszurichten.

In Schritt S30 erfolgt die Analyse des Bildsignals BS, um ein Bildanalyseergebnis BAE bereitzustellen, das in den weiteren Schritten für die zielgerichtete Sprachsteuerung der medizinischen Vorrichtung 1 verwendet werden kann. Beispielsweise kann die Sprachanalysevorrichtung 10 dazu den Bildanalysealgorithmus A1 auf das Bildsignal BS anwenden.

Das Bildanalyseergebnis BAE kann ein oder mehrere Komponenten enthalten, die bei der anschließenden Verarbeitung des Audiosignals AS hilfreich sein können. Diese Komponenten können auf einer Erfassung einer Bedienperson und insbesondere eines Gesichts der Bedienperson basieren. Der Bildanalysealgorithmus A1 kann daher z.B. einen - an sich bekannten - Gesichtserkennungsalgorithmus implementieren.

Beispielsweise kann in einem optionalen Schritt S31 eine Sprechaktivität einer Person, insbesondere einer Bedienperson, als Bildanalyseergebnis BAE bereitgestellt werden. Dazu kann z.B. das Gesicht einer Bedienperson erfasst und eine Lippenbewegung erkannt werden. Ferner kann in einem optionalen Schritt S32 eine Bestätigung einer Anwesenheit einer Person, und insbesondere einer Bedienperson, als Bildanalyseergebnis BAE bereitgestellt werden. Zudem kann in Schritt S32 eine Identität einer Person, insbesondere einer Bedienperson, als Bildanalyseergebnis BAE bereitgestellt werden.

Basierend auf einer in Schritt S32 festgestellten Identität einer Person, insbesondere einer Bedienperson, kann in einem optionalen Schritt S33 ein Authentifizieren einer Person als für eine Bedienung der medizinischen Vorrichtung 1 autorisiert erfolgen. Insbesondere kann in Schritt S33 vorgehsehen sein, weitere Verarbeitungsschritte insbesondere umfassend die weitere Verarbeitung des Audiosignals AS nur dann einzuleiten, wenn in Schritt S33 in dem Bildsignal BS zumindest eine Person erkannt wurde, die zur Bedienung der medizinischen Vorrichtung 1 autorisiert ist.

In Schritt S40 erfolgt eine Analyse des Audiosignals AS unter Verwendung des Bildanalyseergebnis BAE. Dadurch wird in Schritt S40 ein Audioanalyseergebnis AAE bereitgestellt, auf dessen Grundlage dann in den weiteren Schritten die medizinische Vorrichtung 1 gesteuert werden kann.

Das Bildanalyseergebnis BAE kann dabei auf verschiedene Arten zur Verbesserung einer Verarbeitung des Audiosignals AS verwendet werden.

Zum einen kann basierend auf dem Bildanalyseergebnis BAE und insbesondere einer erkannten Sprechaktivität ein Anfang und ein Ende einer Spracheingabe in dem Audiosignal AS bestimmt werden. Damit kann dynamisch erkannt werden, wann eine Spracheingabe der Bedienerperson abgeschlossen ist und mit der umfassenden Analyse der Spracheingabe begonnen werden kann (z.B. im Rahmen von Schritt S50). So wird aus dem Audiosignal AS ein Sprachdatenstrom als Audioanalyseergebnis AAE von je nach Spracheingabe dynamisch variierender zeitlicher Länge erzeugt, der dann der weiteren Analyse in Schritt S50 zugeführt wird.

In einem ersten optionalen Schritt S41 wird basierend auf dem Bildanalyseergebnis BAE ein Beginn BE einer Spracheingabe der Bedienperson in dem Audiosignal AS erkannt. Dies kann gemäß Ausführungsformen anhand einer erkannten Lippenbewegung der Bedienperson erfolgen.

In einem weiteren optionalen Schritt S42 erfolgt basierend auf dem Bildanalyseergebnis BAE ein Erkennen eines Endes EN einer Spracheingabe in dem Audiosignal AS. Dabei kann in gleicher Weise auf eine erkannte Sprechaktivität der Bedienperson zurückgegriffen werden.

In dem optionalen Schritt S43 kann dann basierend auf dem erkannten Beginn und dem erfassten Ende das Audiosignal AS trunkiert und das Signal zwischen Beginn und Ende wird als sog. Sprachdatenstrom als Audioanalyseergebnis AAE für die weitere Verarbeitung bereitgestellt.

Zusätzlich/ergänzend kann ein Beginn und/oder ein Ende einer Spracheingabe anhand des Audiosignals AS selbst erkannt werden. Dies kann in einem optionalen Teilschritt S44 erfolgen, indem z.B. für natürliche Sprache charakteristische Signalanteile erfasst werden. Alternativ können der Beginn und/oder Ende der Spracheingabe dadurch erfasst werden, dass die im Audiosignal AS enthaltene Schallinformation in eine Textinformation (d.h. ein Transkript T) umgewandelt wird und der Beginn der Spracheingabe anhand des Transkripts T bestimmt wird. Diese Funktionalität kann durch ein entsprechendes Softwaremodul ausgeführt werden, das auf dem Datenspeicher 4 abgelegt ist und die Recheneinheit 3 zur Durchführung dieses Schritts veranlasst. Das Softwaremodul kann z.B. Teil des Audioanalysealgorithmus A2 oder des Spracherkennungsalgorithmus A3 sein. Alternativ kann ein von dem Online-Spracherkennungsmodul OM2 bereitgestelltes Transkript T verwendet werden. In einigen Ausführungsformen kann ein Beginn bzw. Ende einer Spracheingabe auch durch eine Kombination aus einer Analyse basierend auf dem Bildanalyseergebnis BAE und einer direkten Analyse des Audiosignals AS erfasst werden. Dadurch können ein Beginn und Ende einer Spracheingabe sicherer erfasst werden, wenn beide Analysen kohärente Ergebnisse liefern.

Zum anderen kann basierend auf dem Bildanalyseergebnis BAE eine Verifikation des Audiosignals AS oder eines Audioanalyseergebnis AAE erfolgen. So kann in einem optionalen Schritt S45 ein Verifikationssignal erzeugt werden, um einen möglichen, in dem Audiosignal AS enthaltenen Sprachbefehl zu verifizieren. Das Verifikationssignal kann beispielsweise als Teil des Audioanalyseergebnisses AAE bereitgestellt werden. Ist das Verifikationssignal positiv, kann mit der weiteren Verarbeitung fortgefahren werden. Insbesondere kann ein Sprachdatenstrom zur Ermittlung von einem oder mehrerer Sprachbefehle SB an das Spracherkennungsmodul M3 weitergeben werden (vgl. Schritt S50). Ist das Verifikationssignal hingegen negativ, wird das Audiosignal AS an dieser Stelle nicht weiter analysiert und insbesondere nicht an das Spracherkennungsmodul M3 übermittelt - zumindest nicht, bis ein positives Verifikationssignal vorliegt. Weitere Details zur Erzeugung des Verifikationssignals werden im Hinblick auf Figur 4 beschrieben.

In Schritt S50 werden ein oder mehrere Steuerbefehle C1 aus dem Audioanalyseergebnis AAE ermittelt.

Gemäß Ausführungsformen der Erfindung können dazu ein oder mehrere Sprachbefehle SB der Bedienperson aus dem Audioanalyseergebnis AEE (oder dem Transkript T) ermittelt werden (optionaler Teilschritt S51). Dazu kann der Spracherkennungsalgorithmus A3 auf das Audioanalyseergebnis AEE angewendet werden. Der Spracherkennungsalgorithmus A3 kann beispielsweise dazu ausgebildet sein, zu erkennen, ob in dem Audioanalyseergebnis AEE (oder dem Transkript T) eine oder mehrere für die Steuerung der medizinischen Vorrichtung 1 relevante Sprachbefehle SB enthalten sind. Der Spracherkennungsalgorithmus A3 kann beispielsweise als Software auf dem Datenspeicher 4 enthalten sein. In alternativen Ausführungsformen kann der Spracherkennungsalgorithmus A3 auch im Online-Spracherkennungsmodul OM2 hinterlegt sein.

Dazu kann der Spracherkennungsalgorithmus A3 beispielsweise dazu ausgebildet sein, zu ermitteln, ob dem Audioanalyseergebnis AEE (oder dem Transkript T) ein oder mehrere in einer Befehlsbibliothek 50 der medizinischen Vorrichtung 1 enthaltene Sprachbefehle zuordenbar sind. Dies kann Regel-basiert anhand der Signaleigenschaften des Audioanalyseergebnis AEE erfolgen. Die Befehlsbibliothek 50 kann eine Auswahl an Sprachbefehlen SB enthalten, denen jeweils eine oder mehrere Signalteile des Audioanalyseergebnis AEE der Bedienperson zuordenbar sind. Ein Signalteil kann dabei eine sprachliche Äußerung der Bedienperson bestehend aus ein oder mehreren Wörtern sein.

Gemäß einigen Implementierungen kann die Befehlsbibliothek 50 ferner eine Auswahl an Sprachbefehlen SB für die medizinische Vorrichtung 1 enthalten, die in Abhängigkeit des aktuellen Systemzustands S1 der medizinischen Vorrichtung 1 aus einer Befehlsdatenbank 5 geladen wird. Die Befehlsbibliothek 50 kann dann temporär für einen jeweiligen Systemzustand S1 generiert und beispielsweise als temporäre Datei in einen Arbeitsspeicher der Recheneinheit 3 geladen werden. Der Inhalt der Befehlsbibliothek 50, also die einzelnen Datensätze, in denen jeweils ein Sprachbefehl mit einer oder mehreren Signalmustern bzw. sprachlichen Äußerungen verknüpft ist, wird aus der Befehlsdatenbank 5 geladen. Welche Datensätze aus der Befehlsdatenbank 5 in die Befehlsbibliothek 50 geladen werden, kann vom Systemzustand S1 der medizinischen Vorrichtung 1 abhängen. Beispielsweise kann die medizinische Vorrichtung 1 bei der Durchführung einer bestimmten Operation lediglich bestimmte andere oder weitere Arbeitsschritte ausführen. Diese Information kann in der Befehlsdatenbank 5 zusammen mit einem Sprachbefehl SB, welcher die Erzeugung eines dem Arbeitsschritt entsprechenden Steuerkommandos C1 bewirkt, hinterlegt sein. Optional umfasst Schritt S50 den optionalen Schritt des Empfangens eines Systemzustands S1 von der medizinischen Vorrichtung (Schritt S52).

Ist der Spracherkennungsalgorithmus A3 in dem Online-Spracherkennungsmodul OM2 gehostet, kann Schritt S50 ferner einen oder mehrere der folgenden Teilschritte umfassen: einen optionalen Teilschritt des Übermittelns, durch die Sprachanalysevorrichtung 10, des Audioanalyseergebnisses AEE an das Online-Spracherkennungsmodul OM2, einen optionalen Teilschritt des Berechnens eines Transkripts T des Audioanalyseergebnis AEE (d.h., des Umwandelns des Audioanalyseergebnis AEE in maschinenlesbaren Text), einen optionalen Teilschritt des Empfangens des Transkripts T durch die Sprachanalysevorrichtung 10 von dem Online-Spracherkennungsmodul OM2, sowie einen optionalen Teilschritt des Identifizierens eines oder mehrerer Sprachbefehle SB basierend auf dem empfangenen Transkript T.

In dem optionalen Teilschritt S53 werden basierend auf den in Schritt S51 erkannten Sprachbefehlen SB ein oder mehrere Steuersignale C1 für die medizinische Vorrichtung 1 bestimmt. Dazu können die erkannten Sprachbefehle SB beispielsweise in Form einer Eingangsvariable einem Befehlsausgabemodul M4 (oder einer entsprechenden Software, die beispielsweise auf dem Datenspeicher 4 abgelegt ist) zugeführt werden, welche die Recheneinheit 3 dann zum Erzeugen eines oder mehrerer Steuersignale C1 veranlasst. Die Steuersignale C1 sind zur Steuerung der medizinischen Vorrichtung 1 gemäß dem oder den Sprachbefehlen SB geeignet.

In Schritt S60 erfolgt schließlich die Übermittlung bzw. Eingabe der Steuersignale C1 an die medizinischen Vorrichtung 1 (zur Steuerung derselben).

In Figur 4 sind optionale Schritte zur Erzeugung eines Verifikationssignals im Rahmen des Schritts S45 aus Figur 3 dargestellt. Die einzelnen Schritte sind optional und können einzeln oder zusammen zur Erzeugung des Verifikationssignals angewendet werden. Die Reihenfolge der Verfahrensschritte ist weder durch die dargestellte Abfolge noch durch die gewählte Nummerierung beschränkt. So kann die Reihenfolge der Schritte ggf. vertauscht und einzelne Schritte können weggelassen werden.

In Schritt S45-A kann basierend auf dem Bildanalyseergebnis BAE überprüft werden, ob eine Person im Umfeld der medizinischen Vorrichtung 1 anwesend ist oder nicht. Ist keine Person anwesend, so kann vorgehen sein, das Audiosignal AS nicht weiter analysieren. Wird eine Person in einer Umgebung der medizinischen Vorrichtung 1 erkannt, besteht die Möglichkeit, dass in dem Audiosignal AS eine zu verarbeitende Spracheingabe vorliegt. Die Verarbeitung kann dann mit der entsprechenden Verarbeitung des Audiosignals AS bis hin zur Bereitstellung und Eingabe der Steuersignale C1 fortfahren.

In Schritt S45-B kann eine Person als zur Bedienung der medizinischen Vorrichtung 1 autorisiert authentifiziert werden. Wurde keine autorisierte Person erkannt, kann von einer Bereitstellung und Eingabe der Steuersignale C1 abgesehen werden. Auch eine weitere Analyse des Audiosignals AS kann unterbleiben. Wurde hingegen eine autorisierte Person erkannt, kann die Verarbeitung des Audiosignals AS bis hin zur Bereitstellung und Eingabe der Steuersignale C1 fortfahren.

Die Authentifizierung einer Person kann dabei basierend auf dem Bildsignal BS bzw. dem Bildanalyseergebnis BAE erfolgen, indem z.B. eine Person durch Gesichtserkennung identifiziert wird. Alternativ oder zusätzlich kann eine Authentifizierung basierend auf dem Audiosignal AS erfolgen (z.B. als zweites Verifizierungssignal). Dabei kann die Sprachanalysevorrichtung beispielsweise dazu ausgebildet sein, eine Stimmensignatur einer Person zu erkennen und die Person so zu identifizieren. Somit kann eine Authentifizierung auf verschiedene Arten erfolgen, wodurch die einzelnen Ergebnisse miteinander verglichen werden können.

Ferner kann die Erzeugung des Verifikationssignals darauf basieren, ob die basierend auf dem Bildsignal BS und dem Audiosignal AS erkannten Identitäten kohärent sind, also zueinander passen. Ist das Verifikationssignal in dieser Hinsicht negativ, kann die weitere Verarbeitung des Audiosignals AS bzw. eines Sprachdatenstroms verzichtet werden. Dadurch kann ausgeschlossen werden, dass bei Anwesenheit einer authentifizierten Person Spracheingaben einer ebenfalls anwesenden, aber nicht authentifizierten Person umgesetzt werden.

Als weiteres Verifikationssignal kann eine Sprechaktivität einer Person bereitgestellt werden. Es kann vorgesehen sein, mit der die Verarbeitung des Audiosignals bis hin zur Bereitstellung und Eingabe der Steuersignale C1 nur dann fortzufahren, falls eine Sprechaktivität erkannt wurde. Andernfalls würde das Audiosignal AS z.B. nicht zur Ermittlung einer Spracheingabe weiterzuleiten.

Auch die Sprechaktivität kann sowohl aus dem Audiosignal AS als auch aus dem Bildsignal BS erhalten werden, was z.B. eine wechselseitige Überprüfung ermöglicht. So kann eine Sprechaktivität in dem Audiosignal dadurch erkannt werden, dass das Audiosignal AS gesprochene Sprache, also eine Spracheingabe, enthält. Dies kann beispielsweise durch die entsprechend ausgebildete Sprachanalysevorrichtung 10 geschehen. Wie bereits ausgeführt, kann eine Sprechaktivität als Bildanalyseergebnis BAE beispielsweise anhand einer Lippenbewegung einer Bedienperson festgestellt werden.

Weiterhin kann das Erzeugen des Verifizierungssignals eine Überprüfung einer (zeitlichen) Kohärenz der aus dem Bildsignal BS und dem Audiosignal AS gewonnenen Sprechaktivitäten einer Person umfassen. So kann z.B. überprüft werden, ob Lippenbewegungen und eine Spracheingabe zeitlich zueinander "passen". Ist das Verifizierungssignal in dieser Hinsicht positiv kann die Verarbeitung des Audiosignals AS bis hin zur Bereitstellung und Eingabe der Steuersignale C1 fortfahren. Andernfalls kann z.B. davon abgesehen werden, das Audiosignal AS (oder einen bereits erzeugten Sprachdatenstrom) an das Spracherkennungsmodul M3 oder das Online-Spracherkennungsmodul OM2 weiterzugeben. Auch dadurch kann z.B. ausgeschlossen werden, dass Spracheingaben einer von einer (ggf. authentifizierten) Bedienperson verschiedenen Person verarbeitet werden.

Insgesamt kann ein Verifizierungssignal somit ein oder mehrere der folgenden Informationen umfassen:
a) Bedienperson ist anwesend basierend auf dem Bildsignal BS;
b) Bedienperson zeigt Sprechaktivität basierend auf dem Bildsignal BS (z.B. basierend auf einer erkannten Lippen-/Mundbewegung);
c) Bedienperson zeigt Sprechaktivität basierend auf dem Audiosignal AS (z.B., wenn eine Spracheingabe in dem Audiosignal AS erkannt wurde);
d) Kohärenz der Sprechaktivtäten basierend auf Audiosignal AS und Bildsignal BS (z.B. Lippenbewegungen und erkannte Spracheingabe passen zeitlich zueinander);
e) Bedienperson ist identifiziert basierend auf Bildsignal BS (z.B. basierend auf einer Gesichtserkennung);
f) Bedienperson ist identifiziert basierend auf Audiosignal AS (z.B. basierend auf einer Stimmerkennung); und/oder
g) Kohärenz der Identitäten basierend auf Audiosignal AS und Bildsignal BS.

Gemäß Ausführungsformen kann sich die Verarbeitung situativ unterschiedlicher Informationen bedienen, um die Abarbeitung der Schritte S40 bis S60 zu optimieren und abzusichern. So kann gemäß einigen Beispielen die Bestimmung des Zeitpunktes eines Beginns und Endes einer Spracheingabe durch ein anderes Verfahren erfolgen als z.B. die Autorisierung der Bedienperson. Zum Beispiel könnte die Bestimmung des Beginns anhand der Informationen b) und c) erfolgen, z.B. wenn zumindest eine von beiden zugehörigen Feststellungen erfüllt ist ("b) ODER c)"). Umgekehrt kann ein Ende der Spracheingabe dann festgestellt werden, keine der beiden Feststellungen erfüllt ist ("weder b) noch c)"). Der so erzeugte Sprachdatenstrom wird aber nur dann an das (Online-)Spracherkennungsmodul weitergegeben, wenn zu einem beliebigen Zeitpunkt innerhalb des Sprachdatenstroms basierend auf dem Verifizierungssignal die Feststellungen a), b) und c) erfüllt sind.

Während Ausführungsbeispiele insbesondere unter Bezugnahme auf die Figuren detailliert beschrieben wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendung und den Aufbau in keiner Weise einschränken sollen. Vielmehr wird dem Fachmann durch die vorausgehende Beschreibung ein Leitfaden für die Umsetzung von mindestens einem Ausführungsbeispiel gegeben, wobei diverse Abwandlungen, insbesondere alternative oder zusätzliche Merkmale und/oder Abwandlung der Funktion und/oder Anordnung der beschriebenen Bestandteile, nach Wunsch des Fachmanns vorgenommen werden können, ohne dass dabei von dem in den angehängten Ansprüchen jeweils festgelegten Gegenstand sowie seiner rechtlichen Äquivalent abgewichen wird und/oder deren Schutzbereich verlassen wird.

## Patentansprüche

1. Computer-implementiertes Verfahren zur Sprachsteuerung einer Vorrichtung (1) mit den Schritten:
- Erfassen (S10) eines Audiosignals (AS) mit einer Audioerfassungseinrichtung (MIK);
- Erfassen (S20) eines Bildsignals (BS) einer Umgebung der Vorrichtung mit einer Bilderfassungseinrichtung (KAM);
- Analysieren (S30) des Bildsignals (BS) zur Bereitstellung eines Bildanalyseergebnisses (BAE);
- Verarbeiten (S40) des Audiosignals (AS) unter Verwendung des Bildanalyseergebnisses (BAE) zur Bereitstellung eines Audioanalyseergebnisses (AAE);
- Erzeugen (S50) eines Steuersignals (C1) zur Steuerung der Vorrichtung (1) basierend auf dem Audioanalyseergebnis (AAE); und
- Eingeben (S60) des Steuersignals (C1) in die Vorrichtung (1) .

2. Verfahren nach Anspruch 1, bei dem
- das Audiosignal (AS) eine Spracheingabe einer Person enthält, und
- das Bildsignal (BS) eine Aufnahme der Person und insbesondere eine Aufnahme des Gesichts der Person enthält.

3. Verfahren nach Anspruch 2, bei dem
- der Schritt des Erfassens (S20) des Bildsignals (BS) ein Ausrichten (S21) der Bilderfassungseinrichtung (KAM) auf die Person und insbesondere auf ein Gesicht der Person umfasst.

4. Verfahren nach einem der Ansprüche 2 oder 3, bei dem
- der Schritt des Analysierens (S30) des Bildsignals (BS) ein Erfassen (S31) einer Sprechaktivität der Person umfasst, und
- das Bildanalyseergebnis (BAE) die Sprechaktivität umfasst.

5. Verfahren nach einem der Ansprüche 2 bis 4, bei dem
- der Schritt des Analysierens (S30) des Bildsignals (BS) ein Erkennen (S32) der Person zur Feststellung einer Identität der Person umfasst, und
- das Bildanalyseergebnis (BAE) die Identität der Person umfasst.

6. Verfahren nach Anspruch 5, bei dem
- der Schritt des Analysierens (S30) des Bildsignals (BS) ein Authentifizieren (S33) der Person als für die Bedienung der Vorrichtung autorisiert basierend auf der Identität umfasst, und
- der Schritt des Verarbeitens (S40) des Audiosignals (AS) und/oder der Schritt des Erzeugens (S50) des Steuersignals (C1) und/oder der Schritt des Eingebens (S60) des Steuersignals (C1) nur ausgeführt werden, falls die Person im Schritt des Authentifizierens (S33) als für die Bedienung der Vorrichtung autorisiert authentifiziert wurde.

7. Verfahren nach einem der vorhergehenden Ansprüche, bei dem
- der Schritt des Verarbeitens (S40) des Audiosignals (AS) umfasst:
- Erkennen (S41) eines Beginns (BE) einer Spracheingabe in dem Audiosignal (AS) basierend auf dem Bildanalyseergebnis (BAE),
- Erkennen (S42) eines Endes (EN) der Spracheingabe basierend auf dem Bildanalyseergebnis (BAE), und
- Bereitstellen (S43) eines Sprachdatenstroms basierend auf dem Audiosignal (AS) zwischen dem erkannten Beginn (BE) und dem erkannten Ende (EN) als Audioanalyseergebnis (AAE), und
- der Schritt des Erzeugens (S50) des Steuersignals (C1) basierend auf dem Sprachdatenstrom erfolgt.

8. Verfahren nach einem der vorhergehenden Ansprüche, bei dem
- der Schritt des Verarbeitens (S40) des Audiosignals (AS) ein Erzeugen (S44) eines Verifikationssignals basierend auf dem Bildanalyseergebnis (BAE) zur Bestätigung einer in dem Audiosignal (AS) enthaltenen Spracheingabe umfasst, und
- der Schritt des Erzeugens (S50) des Steuersignals (C1) basierend auf dem Verifikationssignal erfolgt.

9. Verfahren nach Anspruch 8, bei dem
das Bildanalyseergebnis (BAE) ein Erfassen einer Person umfasst und das Verifikationssignal auf einer Anwesenheit der Person basiert.

10. Verfahren nach einem der Ansprüche 8 oder 9, bei dem
das Bildanalyseergebnis (BAE) eine Sprechaktivität einer Person umfasst und das Verifikationssignal auf einer Ermittlung einer zeitlichen Kohärenz der Sprechaktivität und der Spracheingabe basiert.

11. Verfahren nach einem der Ansprüche 8 bis 10, bei dem
- das Bildanalyseergebnis (BAE) eine Identität einer Person umfasst und das Verifikationssignal auf einem Authentifizieren (S33) der Person als für die Bedienung der Vorrichtung (1) autorisiert basierend auf der Identität basiert.

12. Sprachanalysevorrichtung (10) zur Sprachsteuerung einer Vorrichtung (1) mit
- einer Schnittstelle (31) zum Empfangen eines mit einer Audioerfassungseinrichtung (MIK) erfassten Audiosignals (AS) und eines mit einer Bilderfassungseinrichtung (KAM) erfassten Bildsignals (BS) einer Umgebung der Vorrichtung (1); und
- einer Steuerungsvorrichtung (3), wobei die Steuerungsvorrichtung (3) dazu ausgebildet ist:
- das Bildsignal (BS) zur Bereitstellung eines Bildanalyseergebnisses (BAE) zu analysieren (S30),
- das Audiosignal (AS) unter Verwendung des Bildanalyseergebnisses (BAE) zur Bereitstellung eines Audioanalyseergebnisses (AAE) zu verarbeiten (S40),
- ein Steuersignal (C1) zur Steuerung der Vorrichtung (1) basierend auf dem Audioanalyseergebnis (AAE) zu erzeugen (S50), und
- das Steuersignal (C1) in die Vorrichtung (1) einzugeben (S60).

13. Medizinisches System (100) mit einer Sprachanalysevorrichtung (10) nach Anspruch 12 und der Vorrichtung (1), wobei die Vorrichtung (1) zur Durchführung einer medizinischen Prozedur ausgebildet ist.

14. Computerprogrammprodukt, welches ein Programm umfasst und direkt in einen Speicher einer programmierbaren Recheneinheit ladbar ist, mit Programmmitteln, um ein Verfahren nach den Ansprüchen 1 bis 11 auszuführen, wenn das Programm ausgeführt wird.

15. Computerlesbares Speichermedium, auf welchem lesbare und ausführbare Programmabschnitte gespeichert sind, um alle Schritte der Verfahren nach einem der Ansprüche 1 bis 11 auszuführen, wenn die Programmabschnitte ausgeführt werden.
